# EUROPEAN PATENT APPLICATION

(11) **EP 4 111 863 A1**
(43) Date of publication of application: **04.01.2023**
(21) Application number: 21183575.6
(22) Date of filing: 02.07.2021
(51) Int. Cl.: A01N 43/84, C05G 3/00, A01P 21/00, A01N 37/08, A01N 37/10, A01N 37/44, A01N 41/06, A01N 41/10, A01N 43/90, A01N 47/16, A01N 47/38, A01N 51/00

(54) **PHOSPHORUS USE EFFICIENCY ENHANCERS AS PLANT GROWTH PROMOTORS**

(71) Applicant: EuroChem Antwerpen, 2040 Antwerpen (BE)
(72) Inventor: Habermüller, Heiko, 69469 Weinheim (DE); Henke, Catarina, 53127 Bonn (DE); Mannheim, Thomas, 74547 Untermünkheim (DE); Peters, Nils, 67227 Frankenthal (DE); Audenaert, Dominique, 9660 Brakel (BE); Beeckman, Tom, 9820 Merelbeke (BE); Crombez, Hanne, 8770 Ingelmunster (BE); Motte, Hans, 9000 Gent (BE); Nguyen, Long, 9000 Gent (BE); Smet, Wouter, 4551ES Sas van Gent (NL)
(74) Representative: Willnegger, Eva

(57) **Abstract**

The use of a compound of the general formula (I) 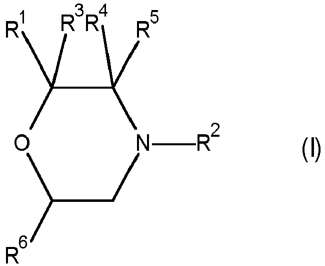 containing one to six cyclic group, at most three of which can be annelated, with the following definitions:
R¹, R⁵
hydrogen, halogen, NH₂, C₁₋₃₀-hydrocarbon residue which is linked with the morpholyl group via a carbon atom and which can contain one to three halogen atoms and/or one to six heteroatoms, selected from the group consisting of nitrogen, oxygen and sulphur, with the proviso that if R¹ is different from hydrogen, then R⁵ is hydrogen, and if R⁵ is different from hydrogen, then R¹ is hydrogen,
R²
C₁₋₃₀-hydrocarbon residue which is linked with the morpholyl group via a carbon atom and which can contain one or two halogen atoms and/or one to ten heteroatoms, selected from the group consisting of nitrogen, oxygen and sulphur,
R³, R⁴, R⁶
hydrogen or C₁₋₃-alkyl, with the proviso that at least two of R¹, R³, R⁴, R⁵ and R⁶ are hydrogen; or two of R¹ to R⁶ are linked with each other to form a 4- to 8- membered carbocyclic or heterocyclic ring structure,
as plant growth promotor.

## Description

The present invention relates to phosphorus use efficiency enhancers as plant growth promotors or P-boosters, a method for promoting growth of a plant, a mixture for promoting growth of a plant, a fertilizer mixture, a process for its production and a method of fertilizing soils.

The use of nitrogen and phosphorus in the form of fertilizers are necessitated by cropping to fulfil in the food demand of a growing population. Fertilizer application should be site-specific to ensure optimum crop production with minimum environmental pollution.

The use of phosphorus fertilizers and hence the rate of phosphorus accumulation in agricultural soils increased almost three-fold between 1960 and 1990. However, the rate of phosphorus accumulation has declined somewhat since 1990.

Even under the best conditions only about 25% of applied fertilizer phosphorus is taken up by the crop during the first cropping season. It is generally understood that at high soil pH levels, phosphorus is precipitated by calcium and magnesium and at low soil pH levels predominately by iron and aluminium. Thus, the historical problem with the soil chemistry of phosphorus fertilizers has been rapid fixation reactions which limit phosphorus availability. Residual phosphorus not taken up by the crop and remaining on or near the soil surface has a possible environmental impact through the combined effects of soil erosion and higher phosphorus concentrations in run-off water. A phosphorus fertilizer product that is more efficient, that produces greater crop responses, has a positive impact on returns to crop producers, and less environmental footprint is highly desirable.

Rock phosphate itself is seldom used directly as a fertilizer because of its low availability of phosphorus and transport cost. Instead, finely ground rock phosphate is treated with sulfuric acid to yield monocalcium phosphate monohydrate and is known as superphosphate. About 85-90% of phosphate in superphosphate is water soluble. In another process, finely ground rock phosphate is reacted with sulfuric acid to produce phosphoric acid (54% P₂O₅), also called green acid, and gypsum, which is removed as a by-product. Phosphoric acid usually is not used directly as a fertilizer because it is corrosive, but is used to manufacture other fertilizers. The reaction of phosphoric acid with finely ground rock phosphate yields triple superphosphate (TSP). Mono ammonium phosphate (MAP) and diammonium phosphate (DAP) are the products of reactions between phosphoric acid and ammonia. Phosphoric acid can be heated to drive off water to produce superphosphoric acid (68-70% P₂O₅), which when reacted with ammonia yields ammonium polyphosphate.

Phosphorus fertilization rates often are given in terms of P, not P₂O₅. The proportion of P in P₂O₅ is used to calculate the equivalent quantity of P in a fertilizer: 2 P/P₂O₅ = (2 × 31 g/mol)/142 g/mol = 0.437. Thus, the percentage of P in a 12-24-12 fertilizer is: 24% P₂O₅ × 0.437 = 10.5% P.

Many phosphorus fertilizers include nitrogen and potassium, which make them more complete fertilizers. A few are only phosphorus fertilizers: superphosphate (CaH₄O₈P₂) contains 25-28% soluble phosphate; Tennessee phosphates contain 60-70% of the relatively insoluble calcium phosphate-Ca₃(PO₄)₂ (the primary natural form; water solubility = 0.002 g/100 g); triple super phosphate contains 48-49% P₂O₅, which provides 41-42% water-soluble P₂O₅; and African phosphates, found in Tunisia and Algeria, contain 55-65% calcium phosphate. Superphosphate is produced by the action of concentrated sulfuric acid on powdered phosphate rock:
Ca₃(PO₄)₂₍ₛ₎ + 2H₂SO_{4(aq)} = 2CaSO_{4(aq)} + Ca(H₂PO₄)_{2(aq)}

Triple superphosphate (originally known as double superphosphate) is produced by the action of concentrated phosphoric acid on ground phosphate rock:
Ca₃(PO₄)₂₍ₛ₎ + 4H₃PO_{4(aq)} = 3Ca²⁺_{(aq)} + 6H₂PO₄¹⁻_{(aq)} = 3Ca(H₂PO₄)_{2(aq)}

The active ingredient, monocalcium phosphate, is identical to that of superphosphate, but does not included calcium sulfate that is formed when sulfuric acid is used. The phosphorus content of triple superphosphate (17-23% P; 44-52% P₂O₅) is roughly three times greater than superphosphate (7-9.5% P; 16-22% P₂O₅). Ammonium and di-ammonium phosphates-(NH₄)₃PO₄-are popular because of the added nitrogen.

Guano typically contains 8-16% nitrogen (the majority of which is uric acid), 8-12% equivalent phosphoric acid, and 2-3% equivalent potash. It is the excrement of seabirds, cave-dwelling bats, and pinnipeds.

Phosphate starvation has a substantial negative effect on plant growth and yield. Phosphorus is an essential element in multiple important plant components and plant physiological processes. Phosphate starvation signaling on the other hand induces a number of mechanisms in the plant to cope with the starvation, for example an increase in phosphate uptake transporters and induction of lateral roots or modulations of the root system architecture in order to forage for more phosphate. Phosphate starvation signaling also induces root hairs and root hair elongation to increase uptake of phosphate. The increased root hair number and root hair surface moreover result in more uptake of nutrients in general and water. Phosphate starvation signaling also result in beneficial symbiotic interactions, for example with arbuscular mycorrhizal fungi, or with ascomycete fungi, such as *Colletotrichium tofieldiae.* These fungi can make an extensive network in the soil to capture and translocate not only phosphate, but also other nutrients to the plants. Phosphate starvation signalling also interact with immune signalling, and affects as such the establishments of, possibly beneficial, microbial colonization or the microbiome in the soil. Phosphate starvation signaling also activates secretion of different substances, including phosphate releasing enzymes, such as phosphatases, acid phosphatases, phosphodiesterases and nucleases, and including acids, such as citrate and malate. These substances make phosphate available for the plant from P-containing resources in the soil such as rock phosphate or mineralized phosphate and organic phosphates, such as organophosphates, plant residues, green manure, microbial biomass, farm yard manure and other biological or organic residues. In summary, activation of phosphate starvation signaling mechanisms increases the yield potential or reduces the required amount of phosphate for the same yield.

The phosphate starvation signaling is quite conserved and involves SPX proteins, for example SPX1 in *Arabidopsis thaliana* (Arabidopsis). SPX1 and homologous SPX proteins in other plants negatively control the phosphate starvation response via inhibition of PHOSPHATE RESPONSE1 (PHR1), a transcription factor and main regulator of the phosphate starvation signaling. Puga MI, et al.: Proceedings of the National Academy of Sciences 2014, 111:14947-14952 describes that SPX1 is a phosphate-dependent inhibitor of PHOSPHATE STARVATION RESPONSE 1 in Arabidopsis.

Rice SPX1 and SPX2 inhibit phosphate starvation responses through interacting with PHR2 in a phosphate-dependent manner, see Wang Z, et al. Proceedings of the National Academy of Sciences 2014, 111:14953-14958. As a consequence, SPX loss of function mutants in for example both Arabidopsis and rice do not negatively control the phosphate starvation response and have a higher phosphate uptake. Similarly, new substances that suppress expression of *SPX* genes are expected to positively affect phosphate use efficiency. Additionally, Arabidopsis *SPX1* is described to be controlled by PHR1 and induced during phosphate starvation, and could be used as a biomarker of phosphate deficiency. Characterization of a sub-family of Arabidopsis genes with the SPX domain reveals their diverse functions in plant tolerance to phosphorus starvation, see Duan K, et al. The Plant Journal 2008, 54:965-975.

Another gene in *Arabidopsis* that is controlled by the PHR1 transcription factor is PHT1;4, encoding a phosphate transporter. PHT1;4 is also induced upon phosphate starvation. This gene has previously been used as a biomarker to screen a library with 3600 biologically active and characterized compounds, which yielded alleviators of phosphate starvation.

US 2015/0272119 A1 discloses 4-chloro-thiophenolic compounds which shall alleviate phosphate starvation symptoms in plants and promote the growth of phosphate deprived plants. In contrast to PHT1;4, which is part of the phosphate starvation response, SPX1 is not only part of the phosphate starvation response, but also functions more upstream in the pathway and contributes to the signalling itself.

The object underlying the present invention is to provide compounds as fertilizer additives that can act as plant growth promotors by enhancing the phosphorus use efficiency of plants. Preferably, the compounds shall mitigate/alleviate the phosphate starvation stress of plants, and/or enhance the phosphorus or phosphate (fertilizer) use efficiency and/or improve the phosphorus or phosphate uptake of plants.

The objects are achieved by the use of a compound of the general formula (I) 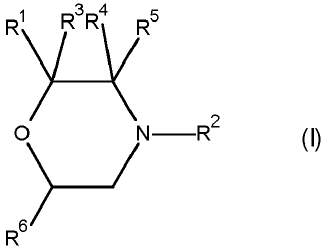 containing one to six cyclic group, at most three of which can be annelated, with the following definitions:
- R¹, R⁵: hydrogen, halogen, NH₂, C₁₋₃₀-hydrocarbon residue which is linked with the morpholyl group via a carbon atom and which can contain one to three halogen atoms and/or one to six heteroatoms, selected from the group consisting of nitrogen, oxygen and sulphur, with the proviso that if R¹ is different from hydrogen, then R⁵ is hydrogen, and if R⁵ is different from hydrogen, then R¹ is hydrogen,
- R²: C₁₋₃₀-hydrocarbon residue which is linked with the morpholyl group via a carbon atom and which can contain one or two halogen atoms and/or one to ten heteroatoms, selected from the group consisting of nitrogen, oxygen and sulphur,
- R³, R⁴, R⁶: hydrogen or C₁₋₃-alkyl, with the proviso that at least two of R¹, R³, R⁴, R⁵ and R⁶ are hydrogen; or two of R¹ to R⁶ are linked with each other to form a 4- to 8- membered carbocyclic or heterocyclic ring structure,
as plant growth promotor.

Preferably at least three, preferably at least four of R¹, R³, R⁴, R⁵ and R⁶ are hydrogen; and/or wherein a cyclic structure is formed by linking of R¹ and R³ or of R⁴ and R⁵ or of R¹ and R⁴ or of R⁴ and R²; and/or wherein the compound of the general formula (I) contains 1 to 7, preferably 2 to 7, more preferably 3 to 5 ring structures.

The objects are preferably achieved by the use of a compound of the general formula (II) 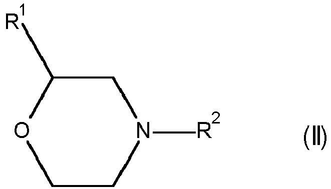 containing one to six cyclic group, at most three of which can be annelated, with the following definitions:
- R¹: hydrogen, halogen, NH₂, C₁₋₃₀-hydrocarbon residue which is linked with the morpholyl group via a carbon atom and which can contain one to three halogen atoms and/or one to six heteroatoms, selected from the group consisting of nitrogen, oxygen and sulfur,
- R²: C₁₋₃₀-hydrocarbon residue which is linked with the morpholyl group via a carbon atom and which can contain one or two halogen atoms and/or one to seven heteroatoms, selected from the group consisting of nitrogen, oxygen and sulfur
as plant growth promotor.

According to the present invention, it has been found that compounds of the above general formula (I) or (II) can be successfully employed as plant growth promotors. They enhance the phosphorus use efficiency of plants. They mitigate/alleviate the phosphate starvation stress of plants. They enhance the phosphorus or phosphate (fertilizer) use efficiency and are therefore "P-boosters". They improve the phosphorus or phosphate uptake of plants.

More specifically, they preferably suppress the expression of phosphate starvation biomarkers in plants, more specifically suppress the SPX1 biomarker or suppress the *Arabidopsis* gene *SPX1.*

According to the present invention it has been found that the suppressor of SPX1 has positive/circumventing effects on phosphate stress parameters and plant growth, specifically on *Arabidopsis,* rice, soybean and maize in non-optimal phosphate conditions, thereby being able to enhance the phosphorus or phosphate fertilizer use efficiency.

The compounds suppress the expression of the *Arabidopsis* gene SPX1, a (negatively regulated) phosphate starvation biomarker, implying a reduction of phosphate starvation.

The object is achieved by the use of a compound of the general formula (I) or (II) as plant growth promotor, preferably as biostimulant and/or as fertilizer additive.

The use is preferably for suppressing
- the expression of phosphate starvation biomarkers in plants or
- the SPX1 biomarker or
- the Arabidopsis gene SPX1.

The use is more preferably
- for mitigating and/or reducing the phosphate starvation stress of plants
   or for improving
- the phosphorus or phosphate use efficiency of plants or
- the phosphorus or phosphate uptake of plants,
- the root hair development,
- root system architecture,
- drought resistance development,
- nutrient uptake efficiency of plants,
- the phosphate availability for plants,
- water or nutrient uptake of plants,
- beneficial symbiotic interactions of plants,
- soil microbiome or
- phosphorous or phosphate availability from phosphate rock or organic phosphate.

The object is furthermore achieved by a method for promoting growth of a plant, comprising adding to growing medium or soil in which the plant is grown, a compound as defined above.

The invention furthermore relates to a mixture containing at least one compound of general formula (I) or (II) as defined above,
and at least one additional agrochemical agent, preferably selected from the group consisting of
- at least one inorganic and/or organic and/or organomineral fertilizer
- at least one nitrification inhibitor, preferably selected from the group consisting of 2-(3,4-dimethyl-pyrazol-1-yl)-succinic acid (DMPSA), 3,4-dimethylpyrazole (DMP), 3,4-dimethylpyrazolephosphate (DMPP), dicyandiamide (DCD), 1H-1,2,4-triazole, 3-methylpyrazole (3-MP), 2-chloro-6-(trichloromethyl)-pyridine, 5-ethoxy-3-trichloromethyl-1,2,4-thiadiazol, 2-amino-4-chloro-6-methyl-pyrimidine, 2-mercapto-benzothiazole, 2-sulfanilamidothiazole, thiourea, sodium azide, potassium azide, 1-hydroxypyrazole, 2-methylpyrazole-1-carboxamide, 4-amino-1,2,4-triazole, 3-mercapto-1,2,4-triazole, 2,4-diamino-6-trichloromethyl-5-triazine, carbon bisulfide, ammonium thiosulfate, sodium trithiocarbonate, 2,3-dihydro-2,2-dimethyl-7-benzofuranol methyl carbamate and N-(2,6-dimethylphenyl)-N-(methoxyacetyl)-alanine methyl ester,
- at least one urease inhibitor, preferably selected from N-n-butylthiophosphoric triamide (NBTPT or NBPT) and/or N-n-propylthiophosphoric triamide (NPTPT or NPPT),
- at least one customary agrochemical auxiliary agent, preferably selected from the group consisting of aqueous and/or organic solvents, pH-adjusting agents, surfactants, wetting agents, spreading agents, adhesion promoters, carriers, fillers, viscosity-adjusting agents, emulsifiers, dispersants, sequestering agents, anti-settling agents, coalescing agents, rheology modifiers, defoaming agents, photo-protectors, anti-freeze agents, (additional or further) biostimulants, pesticides/plant protection products, biocides, (additional or further) plant growth regulators, safeners, penetrants, anticaking agents, mineral and/or vegetable oils and/or waxes, colorants and drift control agents,
   and mixtures thereof.

The invention furthermore relates to a fertilizer mixture, containing
A. an inorganic and/or organic and/or organomineral fertilizer and
B. 10 to 10000 weight-ppm, based on the fertilizer, of a compound of the general formula (I) or (II) as defined above.

The invention furthermore relates to a process for producing the fertilizer mixture as defined above by introducing the compound of the general formula (I) or (II) into the fertilizer, and/or applying the compound of the general formula (I) or (II) to the surface of the fertilizer.

The invention furthermore relates to a method of fertilizing soils exploited agriculturally or horticulturally including home and garden,
wherein a fertilizer mixture containing compounds A and B
A. an inorganic and/or organic and/or organomineral fertilizer and
B. an effective amount, preferably 10 to 10000 weight-ppm, more preferably 100 to 3000 weight-ppm, based on the fertilizer, of a compound of the general formula (I) or (II) as above,
   or compounds A and B separately, but within a period of 0 to 5 hours, preferably 0 to 1 hour, more preferably approximately at the same time,
   is applied onto or into the soils by any application technique.

The compounds of general formula (I) or (II) suppress *Arabidopsis* SPX1 and promote plant growth in phosphate starvation conditions. The positive effect was validated on plant growth in diverse plants. The results show that the activity of the substance class is retained in a number of variants, which structurally characterize the class of molecules with this activity.

The results show that the use of SPX genes as a biomarker to screen for SPX suppressing molecules is a potent approach to discover new plant growth promoting or phosphate stress reducing substances.

The invention also relates to the use of SPX genes as a biomarker to screen for SPX suppressing molecules and a screening method for potentially SPX suppressing molecules, involving the *SPX* genes as biomarker.

When the compounds of general formula (I) or (II) are employed in combination with a phosphorus-containing fertilizer, the phosphorus uptake of the plant can be increased, leading to a higher yield and growth of the plant.

Besides suppressing the SPX1 biomarker, the compounds according to the present invention can also alleviate, mitigate or inhibit *in vivo* expression of the *PHT1;4* gene and coding of the high affinity phosphate transporter PHT1;4 in *Arabidopsis thaliana,* as described in US 2015/0272119 A1.

According to the present invention it has been found that the structural element depicted in formula (I) or (II) is responsible for the suppression of the *Arabidopsis* gene SPX1 or phosphate starvation biomarker.

The term "independently" defines that the meaning for each residue can be selected independent of the meaning for another member or binding position of the mentioned residues. For example, R² and R⁵ can be the same or different.

The compounds according to the present invention are typically employed in connection with a phosphorus-containing fertilizer.

Furthermore, the fertilizer can contain further elements, like nitrogen or potassium, e.g. in NP- or NPK-fertilizers.

The compounds according to the present invention can be combined with a nitrification inhibitor and/or urease inhibitor.

Nitrogen sources are mainly ammonium (NH₄⁺) and nitrate (NO₃⁻ and urea). In practical application, an average N-fertilizer loss of up to 50% can be observed. Often the nitrogen is converted via the nitrogen cycle into inaccessible N-forms, e.g. by microbial conversion into the greenhouse gas N₂O or into nitrate.

One approach to limit the amount of N-emissions as much as possible is to inhibit nitrification, i.e. the conversion of NH₄⁺ or NH₃ into NO₃⁻ and hydrolysis of urea via UI.

In contrast to NO₃⁻, the positively charged NH₄⁺ binds to the negatively charged soil particles and will hardly leach from the soil. Therefore, NH₄⁺ is the preferred N-source and should be kept available in soil for plant uptake. NH₄⁺ may however be converted into NO₃⁻ via nitrification, a microbial process of the global N cycle whereby NH₃, which is in a pH-dependent equilibrium with NH₄⁺, is converted into NO₃⁻ via nitrite (NO₂⁻) by soil micro-organisms. Hence, nitrification is a central step that causes the entering of NH₄⁺ in the N cycle and its subsequent conversion into undesired leachable or volatile N-forms.

The first step in nitrification, NH₃ oxidation, is in agricultural soils and substrates predominantly performed by ammonia-oxidizing bacteria (AOB). They first oxidize NH₃ into hydroxylamine (NH₂OH), which is catalyzed by the ammonia-monooxygenase (AMO) enzyme. Subsequently, the hydroxylamine oxidoreductase (HAO) enzyme catalyzes the second step: NH₂OH oxidation to form nitrite (NO₂⁻).

Nitrification inhibitors, which are currently commercially distributed, include dicyandiamide (DCD), nitrapyrin (2-chloro-6-(trichloromethyl)-pyridine) or 3,4-dimethylpyrazole phosphate (DMPP).

Therefore, the compounds according to the present invention can be advantageously used together with or combined with or in admixture with nitrification inhibitors which are preferably inhibiting ammonia-oxidizing bacteria (AOB) or archaea (AOA).

Furthermore, specifically if the fertilizer contains urea, the compound can also be used together or combined with or in admixture with an urease inhibitor, which is preferably selected from N-n-butylthiophosphoric triamide (NBTPT or NBPT) and/or N-n-propylthiophosphoric triamide (NPTPT or NPPT).

The compounds according to the present invention can as well be combined with a nitrification inhibitor and an urease inhibitor, specifically in case of fertilizers containing ammonium and urea and a source for phosphorus.

If the compound of the present invention is combined with a nitrification inhibitor, the weight ratio of compound of the present invention to nitrification inhibitor is preferably in the range of from 0.01 to 100 : 1, more preferably 0.1 to 10 : 1.

If the compound according to the present invention is combined with a urease inhibitor, the weight ratio of compound of the present invention to urease inhibitor is preferably in the range of from 0.01 to 100 : 1, more preferably 0.1 to 10 : 1.

If the nitrification inhibitor is combined with N-n-butylthiophosphoric triamide (NBTPT) and/or N-n-propylthiophosphoric triamide (NPTPT), the weight ratio of nitrification inhibitor(s) to urease inhibitor is preferably in the range of from 0.1 to 10 : 1, more preferably 0.5 to 8 : 1, most preferably 1 to 6 : 1.

Furthermore, the compounds of the present invention can be combined with an inorganic and/or organic and/or organomineral fertilizer, specifically a fertilizer which contains a phosphorus source.

Furthermore, it is possible to combine the compounds of the present invention with at least one customary agrochemical (auxiliary) agent.

Therefore, the present invention defines a mixture of the compounds of general formula (I) or (II) as defined above, with
- at least one fertilizer, or
- at least one nitrification inhibitor, preferably selected from the group consisting of 2-(3,4-dimethyl-pyrazol-1-yl)-succinic acid (DMPSA), 3,4-dimethylpyrazole (DMP), 3,4-dimethylpyrazolephosphate (DMPP), dicyandiamide (DCD), 1H-1,2,4-triazole, 3-methylpyrazole (3-MP), 2-chloro-6-(trichloromethyl)-pyridine, 5-ethoxy-3-trichloromethyl-1,2,4-thiadiazol, 2-amino-4-chloro-6-methyl-pyrimidine, 2-mercapto-benzothiazole, 2-sulfanilamidothiazole, thiourea, sodium azide, potassium azide, 1-hydroxypyrazole, 2-methylpyrazole-1-carboxamide, 4-amino-1,2,4-triazole, 3-mercapto-1,2,4-triazole, 2,4-diamino-6-trichloromethyl-5-triazine, carbon bisulfide, ammonium thiosulfate, sodium trithiocarbonate, 2,3-dihydro-2,2-dimethyl-7-benzofuranol methyl carbamate and N-(2,6-dimethylphenyl)-N-(methoxyacetyl)-alanine methyl ester, or
- at least one urease inhibitor, preferably selected from N-n-butylthiophosphoric triamide (NBTPT) and/or N-n-propylthiophosphoric triamide (NPTPT), or
- at least one customary agrochemical auxiliary agent, preferably selected from the group consisting of aqueous and/or organic solvents, pH-adjusting agents, surfactants, wetting agents, spreading agents, adhesion promoters, carriers, fillers, viscosity-adjusting agents, emulsifiers, dispersants, sequestering agents, anti-settling agents, coalescing agents, rheology modifiers, defoaming agents, photo-protectors, anti-freeze agents, (additional or further) biostimulants, pesticides/plant protection products, biocides, (additional or further) plant growth regulators, safeners, penetrants, anticaking agents, mineral and/or vegetable oils and/or waxes, colorants and drift control agents,
   or mixtures thereof.

The term "additional or further" describes biostimulants and/or plant growth regulators that are different from the compounds of general formula (I) or (II).

A combination with at least one phosphorus source, nitrification inhibitor and/or urease inhibitor is preferred.

The compounds of the invention are preferably employed in combination with a fertilizer, more preferably a phosphorus source and possibly an (ammonium) nitrogen-containing fertilizer, e.g. solid or liquid inorganic, organic and/or organomineral fertilizer, or manure. The compound is for example employed on solid fertilizers, or is employed in liquid organic or inorganic or organomineral fertilizers or manure.

The compounds of general formula (I) or (II) are mostly known *per se* and can be synthesized according to standard techniques. They partly are commercially available compounds and can be obtained from ENAMINE Ltd., UkrOrgSynthesis Ltd., or Vitas-M Laboratory, Ltd. or from Merck Millipore, Burlington, MA, USA, or Merck KGaA.

In the compounds of formula (I), there are six possible positions for substituents R¹ to R⁶. However, at least two of R¹, R³, R⁴, R⁵ and R⁶ are hydrogen, so that the compound of the general formula (I) contains up to four substituents which are different from hydrogen. Preferably, one to three of R¹ to R⁶ are different from hydrogen, more preferably one or two of them.

Furthermore, two of R¹ to R⁶ can be linked with each other to form a 4- to 8-membered carbocyclic or heterocyclic ring structure. For example R¹ and R³ can form a carbocyclic or heterocyclic ring structure, as well as R⁴ and R⁵. Most prominent are cyclopropyl, cyclobutyl, cyclopentyl, cyclohexyl or cycloheptyl structures. Preferably, only one of these cyclic structures is present in the compound of the general formula (I).

Furthermore, R¹ and R⁴ can together form a carbocyclic or heterocyclic structure which is preferably a 5-, 6- or 7-membered carbocyclic or heterocyclic structure which additionally can also contain ethylenically unsaturated elements.

Furthermore, it is possible that R⁴ and R² form a heterocyclic ring structure with preferably 5, 6 or 7 elements.

With the exception of the afore-mentioned ring structures, only one of R¹ and R³ and only one of R⁴ and R⁵ can be different from hydrogen.

Preferably, the compound of the general formula (I) contains only two substituents R¹ to R⁶ which contain more than two carbon atoms, preferably which contain more than one carbon atom.

More preferably, the compound of the general formula (I) contains one or two substituents which contain more than two carbon atoms and none or one additional substituent which contains at most one carbon atom.

All ring structures contained in the compound of general formula (I) can be furthermore substituted or unsubstituted.

If R¹ contains more than two carbon atoms, then R³ preferably is hydrogen. If R¹ is methyl, R³ is preferably methyl or hydrogen. If R⁴ contains more than two carbon atoms, then R⁵ preferably is hydrogen or methyl. Preferably R⁵ is hydrogen or methyl if R⁴ is methyl. If R⁶ contains more than two carbon atoms, preferably R¹ contains 0 to 2 carbon atoms and R³ is hydrogen.

Cyclic groups within the compound of the general formula (I) preferably contain 0 to 3 hetero atoms in the ring, more preferably 0 to 2 hetero atoms.

In the compounds of formula (I) or (II), preferably heteroatoms of the same or different chemical element are preferably not adjacent. Nitrogen- nitrogen bonds, however, are permitted. Preferably, heteroatoms are not directly linked to each other in these compounds.

The compounds of formula (I) or (II) preferably contain 1 to 7 or 2 to 7 or 1 to 6 cyclic structures in the molecule, more preferably 1 to 5 or 2 to 5 or 3 to 5 cyclic structures in the molecule.

The cyclic structure depicted in general formula (I) or (II) preferably cannot be condensed with a further cyclic structure. In addition to the cyclic structure depicted in general formula (I) or (II) preferably 0 to 5, more preferably 0 to 4, most preferably 0 to 3, in particular 0, 1; 2 or 3 further cyclic structures are present, one or two, preferably one of these additional cyclic structures can be condensed with another cyclic structure, but not with the ring depicted in formula (I) or (II).

Condensed or annellated cyclic structures are cyclic structures in which two cyclic structures share two chemical elements, preferably two carbon atoms, in their respective ring structures

The additional cyclic structures can be saturated or unsaturated or aromatic. If two condensed cyclic structures are present, it is possible that one cyclic structure is aromatic and the other cyclic structure is non-aromatic.

If two cyclic structures are not condensed, they can be directly covalently linked with each other. Alternatively, they can be linked by a spacer which can contain carbon atoms, heteroatoms or both. For example, the spacer can be a C₁₋₆-alkylene group, a heteroatom selected from the group consisting of oxygen, sulfur and nitrogen, or the spacer can for example be an amido group -C(=O)-NH-. If the cyclic groups are linked by a nitrogen atom, this nitrogen is preferably - NH- or -NR- with R being C₁₋₄-alkyl, more preferably R being methyl or ethyl.

Cyclic structures can also be described as structural elements that form part of the compounds of general formula (I) or (II). Preferably, all cyclic groups are heterocyclic groups. More preferably, the compound of the general formula (I) or (II) contains one to four heterocyclic structures but no carbocyclic structures. Preferably, at most one annellated ring is present in the compound, i.e. most one heterocyclic structure is annellated with heterocyclic structure, but not the morpholyl group.

R¹ is hydrogen, halogen, NH₂, C₁₋₃₀-hydrocarbon residue which is linked with the morpholyl group via a carbon atom and which contain one to three halogen atoms and/or one to six heteroatoms, selected from the group consisting of nitrogen, oxygen and sulfur. Preferably was R¹ is hydrogen or a C₁₋₁₂-hydrocarbon residue, more preferably hydrogen or a C₃₋₇-hydrocarbon residue. Preferably, the hydrocarbon residue contains one to five heteroatoms, more preferably one to four heteroatoms. Preferably, R¹ contains 0 or 1 sulfur atoms, 0; 1; 2 or 3 nitrogen atoms and 0 or 1 oxygen atoms. Preferably, R¹ contains no halogen atoms. The carbon atom with which R¹ is linked with the morpholyl group can be part of a saturated or unsaturated, cyclic or non-cyclic group.

R² is a C₁₋₃₀-hydrocarbon residue which is linked with the morpholyl group via a carbon atom and which can contain one or two halogen atoms and/or one to seven heteroatoms, selected from the group consisting of nitrogen, oxygen and sulfur. R² preferably is a C₁₋₁₂-hydrocarbon residue, more preferably C₁₋₈-hydrocarbon residue.

R² preferably contains 0 to 6 heteroatoms, more preferably 0 to 5 heteroatoms. Preferably, 0 or 1 sulfur atoms, 0; 1 or 2 oxygen atoms and 0; 1; 2 or 3 nitrogen atoms are present in R².

In addition to the morpholyl group, preferably 2 to 8, more preferably 3 to 6, most preferably 4 to 6 additional heteroatoms are present which are selected from nitrogen, oxygen and sulfur. In addition to the heteroatoms of the morpholyl group, preferably 0 to 2 sulfur atoms, 0 to 2 oxygen atoms and 2 to 5 nitrogen atoms are present in the compound of general formula (I) or (II).

In the examples, specific residues R¹ and R² are disclosed for formula (I) or (II). Each of these residues can be employed for limiting the compounds of general formula (I) or (II), irrespective of the other residue. Thus, the compounds of general formula (I) or (II) can contain one or more of the residues R¹ or R² as disclosed in each of the examples.

Preferably, the compounds of formula (I) and (II) include at least one thiazole group. If the thiazole group is part of R² in formula (I) or (II), the thiazole group is preferably directly bonded to the nitrogen of the morpholine ring system. If the thiazole group is part of R¹, R¹ is preferably derived from a substituted amino methyl group. Therefore, the thiazole group is preferably linked with the morpholie ring via an aminomethyl group.

Furthermore, the substituent containing the thiazole group furthermore preferably contains a NH group or -NH-C(=O)-group.

Most preferably, R¹ is hydrogen, methyl, amino methyl or substituted amino methyl, in which the substituent can contain a thiazole group.

In the compounds of formula (I), preferably one of R¹ and R² is hydrogen or methyl, and the other of R¹ and R² contains a thiazole group and preferably contains 4 or 5 hetero atoms including at least two nitrogen atoms.

Most preferably, the compounds of formula (I) contain two or three ring structures which all are heterocyclic and preferably which all contain two hetero atoms including one nitrogen atom.

Preferably, the compounds of the general formula (I) or (II) are free from pyrazole or substituted pyrazole groups.

The compounds of the invention are plant additives which can alleviate phosphate starvation symptoms in plants and promote the growth of phosphate deprived plant and can be described as P-boosters.

They substantially improve the whole plant growth in low P, especially low P conditions, suggesting that these compounds unlock a mechanism restricting growth.

Advantageously, the compound according to the present invention is useful for reducing the need for phosphate fertilizer for growing plants.

The term "plant" includes any monocot or dicot plant, such as a plant of the Fabaceae or Brassicaceae family, in particular Medicago sativa (Alfalfa).

In another embodiment, said plant is grown under phosphate limiting conditions. As used herein, the term "under phosphate limiting conditions" means under low phosphate conditions, i.e., under a content of phosphate that is not optimum for the growth of the specific plant.

The mixture of the present invention provides a plant additive composition comprising:
a compound of formula (I) as defined above and
a formulation adjuvant, such as a carrier, a solvent or a surface-active agent.

By "plant additive composition" is meant any kind of soil additive, soil amendment, fertilizer or soil conditioner, which can of course be used to modify a soil, but also in hydroponic cultures.

More particularly, said plant additive composition is a composition for promoting plant growth and/or for alleviating P starvation symptoms.

The plant additive composition according to the present invention is typically not intended for use as an herbicide, in particular as a defoliant, a desiccant, an herbage killer, a germination inhibitor or a weed killer.

The plant additive composition can be a liquid or solid (typically granulated or powdered) composition, such as dusting powders, gels, wettable powders, water-dispersible granules, water-dispersible tablets, effervescent compressed tablets, emulsifiable concentrates, microemulsifiable concentrates, oil-in-water emulsions, oil flowables, aqueous dispersions, oil dispersions, suspoemulsions, capsule suspensions, emulsifiable granules, soluble liquids, water-soluble concentrates (with water or a water-miscible organic solvent as carrier), or impregnated polymer films.

In a particular embodiment, the plant additive composition further comprises at least one primary nutrient selected from the group consisting of nitrogen and potassium, and/or at least one secondary nutrient selected from the group consisting of calcium, magnesium, sodium and sulfur, and/or at least one micronutrient selected from the group consisting of boron, cobalt, copper, iron, manganese, molybdenum and zinc.

Advantageously, said plant additive composition comprises a compound of formula (I) or (II) as defined above and at least one or the 2 primary nutrients as defined above.

Advantageously, said plant additive composition comprises a compound of formula (I) or (II) as defined above and at least one or the 2 primary nutrients and the 4 secondary nutrients as defined above.

Advantageously, said plant additive composition comprises a compound of formula (I) or (II) as defined above, nitrogen, potassium, calcium, magnesium, sodium, sulfur, boron, cobalt, copper, iron, manganese, molybdenum and zinc.

Advantageously, a liquid plant additive composition comprises a solvent such as a polar water-soluble solvent, a micelle or a surfactant.

The present invention provides a method for promoting the growth of a plant, comprising adding to the growing medium or soil on which said plant is grown, a compound of formula (I) or (II) as defined above, or a plant additive composition comprising a compound of formula (I) or (II) as defined above and a formulation adjuvant as defined above.

The method according to the present invention is not intended for promoting the growth of a plant by inhibiting the growth of another plant (e.g., a weed). Preferably, said plant is grown under phosphate limiting conditions.

The growing medium includes liquid, semi-solid or solid medium suitable to support the growth of a plant. By way of example, it can be a mineral nutrient solution or an inert material such as heydite, clay pellets, perlite, vermiculite or rockwool. Advantageously, the growing medium contains the nutrients required to support the growth of the plant.

The present invention provides the use of a compound of formula (I) or (II) as defined above for preparing a plant additive composition as defined above useful for promoting the growth of a plant. Preferably, said plant is grown under phosphate limiting conditions.

The P-boosters are described as those of general formula (I) or (II). One or more compounds of formula (I) or (II) can be employed as P-boosters and in the fertilizer discussed below. Furthermore, it is possible to employ mixtures of one or more compounds of general formula (I) or (II). This is reflected by the expression formula (I) or (II).

It is expected that the P-booster of the present invention possesses favorable toxicological properties, has a low vapor pressure, and is sorbed well in the soil. As a consequence, the P-booster is neither emitted to the atmosphere by sublimation to any significant extent nor is easily leached by water. As a result, first of all, economic advantages arise, such as a high profitability in view of the longer-lasting effect of the P-booster, and environmental advantages, such as a reduction in the burdening of air (climate gas-reducing) and of surface waters and ground water.

The P-boosters can be applied to soils or substrates which are fertilized with an inorganic or organic or organomineral fertilizer. Typically, they are employed in a fertilizer mixture comprising such fertilizer and the compound of general formula (I) or (II). Typically, the compound of general formula (I) or (II) is employed in an amount of 10 to 10000 ppm by weight, more preferably 100 to 10000 ppm by weight, based on the fertilizer without water. The application amount is based on the dry fertilizer.

The P-booster according to the present invention can be employed in substance, in solution, dispersion or emulsion. Therefore, the invention also relates to a solution, dispersion or emulsion containing the compound of general formula (I) or (II) of the present invention preferably in an amount of from 0.1 to 50 wt%, more preferably 0.5 to 30 wt%, most preferably 1 to 20 wt%.

Preferably, according to the present invention, fertilizers are employed for forming a fertilizer mixture, containing compounds A and B
A. an inorganic and/or organic and/or organomineral fertilizer and
B. 10 to 10000 weight-ppm, more preferably 100 to 10000 weight-ppm, based on the fertilizer, of the compound of general formula (I) or (II) as defined above.

The water fraction in compound A and in the fertilizer mixture is often not more than 1.5 wt%, preferably not more than 1.0 wt%, more preferably not more than 0.5 wt%, most preferably not more than 0.3 wt%, and is therefore negligible in the balance of quantities. Compounds A and B preferably make up at least 95 wt%, more preferably at least 98 wt% of the fertilizer mixture.

The nitrogen content of component A (without water), is often at least 12 wt%, preferably at least 20 wt%, more preferably at least 22 wt%. For example, the nitrogen content may be 25 to 29 wt%, particularly 26 to 28 wt%. The nitrogen content can be divided between fast-acting nitrate nitrogen and slow-acting ammonium nitrogen.

The inorganic fertilizers preferably are ammonium- and/or urea-containing fertilizers, more preferably ammonium-containing fertilizers which can additionally contain urea.

Urea-containing fertilizers are further described in WO 2016/207210.

Fertilizers typically provide, in varying proportions:
- three main macronutrients:
   - Nitrogen (N): leaf growth
   - Phosphorus (P): Development of roots, flowers, seeds, fruit;
   - Potassium (K): Strong stem growth, movement of water in plants, promotion of flowering and fruiting;
- three secondary macronutrients: calcium (Ca), magnesium (Mg), and sulfur (S);
- micronutrients: copper (Cu), iron (Fe), manganese (Mn), molybdenum (Mo), zinc (Zn), boron (B). Of occasional significance are silicon (Si), cobalt (Co), and vanadium (V).

The fertilizers employed according to the present invention can be of natural or synthetic origin and are applied to soil or to plant tissues to supply one or more plant nutrients essential to the growth of plants. The fertilizers employed according to the present invention should provide at least nitrogen as nutrient. Further nutrients are for example K and P. Multinutrient fertilizers/complex fertilizers provide two or more nutrients. Inorganic fertilizers exclude carbon-containing materials except ureas. Organic fertilizers are usually plant- or animal-derived matter. Organomineral fertilizers (combination of inorganic and organic fertilizers) can be employed as well.

The main nitrogen-based straight fertilizer is ammonia or its solutions. Ammonia nitrate is also widely used. Urea is another popular source of nitrogen, having the advantage that it is solid and non-explosive. A further nitrogen-based fertilizer is calcium ammonium nitrate.

The main straight phosphate fertilizers are the superphosphates. "Single superphosphate" (SSP) consists of 14-18% P₂O₅, again in the form of Ca(H₂PO₄)₂, but also phosphogypsum (CaSO₄ • 2H₂O). Triple superphosphate (TSP) typically consists of 44-48% of P₂O₅ and no gypsum. A mixture of single superphosphate and triple superphosphate is called double superphosphate. More than 90% of a typical superphosphate fertilizer is water-soluble.

Diammonium phosphate (DAP) quickly became the item of commerce as most widely used by the growers today, and it has the highest concentration of phosphate and nitrogen at 18 N-46P₂O₅-0K₂O

Monoammonium phosphate (MAP) is essentially the same as DAP, but it has a lower concentration of nitrogen at 11 N - 52 P₂O₅-0 K₂O. It is completely water soluble and has granular material; it mixes well and frequently serves as an ingredient in bulk-blended fertilizers.

Granulated triple superphosphate (GTSP) is very similar to the superphosphate fertilizer that provides 46% P₂O₅, some calcium and sulfur to plants. GTSP is formed by reaction of phosphate rock with phosphoric acid.

Superphosphoric acid is an acid used to make a concentrated or fluid fertilizer.

Phosphoric acid is used in granulation plants where ammonia is added to phosphoric acid to produce the ammoniated phosphate fertilizer
Phosphate fertilizers are obtained by extraction from phosphate rock, which contains two principal phosphorus-containing minerals, fluorapatite Ca₅(PO₄)₃F (CFA) and hydroxyapatite Ca₅(PO₄)₃OH. These minerals are converted into water-soluble phosphate salts by treatment with sulfuric (H₂SO₄) or phosphoric acids (H₃PO₄).

In the nitrophosphate process or Odda process, phosphate rock with up to a 20% phosphorus (P) content is dissolved with nitric acid (HNO₃) to produce a mixture of phosphoric acid (H₃PO₄) and calcium nitrate (Ca(NO₃)₂). This mixture can be combined with a potassium fertilizer to produce a compound fertilizer with the three macronutrients N, P and K in easily dissolved form.

The main potassium-based straight fertilizer is muriate of potash (MOP).

### Binary (NP, PK) fertilizers

Major two-component fertilizers provide both nitrogen and phosphorus to the plants. These are called NP fertilizers. The main NP fertilizers are monoammonium phosphate (MAP) and diammonium phosphate (DAP). The active ingredient in MAP is NH₄H₂PO₄. The active ingredient in DAP is (NH₄)₂HPO₄. About 85% of MAP and DAP fertilizers are soluble in water. NPK fertilizers are three-component fertilizers providing nitrogen, phosphorus and potassium. NPK fertilizers can be produced by mixing straight fertilizers as mentioned above in bulk or in each granule, as in Nitrophoska^{®}. In some cases, chemical reactions can occur between the two or more components.

NPK fertilizers are at least three-component fertilizers providing nitrogen, phosphorus and potassium. NPK fertilizers can be produced by mixing straight fertilizers as mentioned above in bulk or in each granule, as in Nitrophoska^{®}. In some cases, chemical reactions can occur between the two or more components.

For example, monoammonium and diammonium phosphates, which provide plants with both N and P, are produced by neutralizing phosphoric acid (from phosphate rock) and ammonia:

NH₃ + H₃PO₄ → (NH₄)H₂PO₄

2 NH₃ + H₃PO₄ → (NH₄)₂HPO₄

Besides the main constituents, like N, P and K, micronutrients (trace elements) may be present in the fertilizers. The main micronutrients are molybdenum, zinc, boron and copper. These elements are typically provided as water-soluble salts.

Preferred fertilizers contain ammonium or urea. Examples of preferred ammonium-containing fertilizers are NPK fertilizers, calcium ammonium nitrate, ammonium sulfate nitrate, ammonium sulfate and ammonium phosphate.

Further preferred ingredients of the fertilizer compositions are for example trace elements, further minerals, standardizers, binders.

Organic fertilizers can describe those fertilizers with an organic or biologic origin, i.e. fertilizers derived from living or formerly living materials, like animals or plants or algae. Fertilizers of an organic origin include animal wastes, plant wastes e.g. from food processing or agriculture, compost, and treated sewage sludge (biosolids). Animal sources can be manures, but also products from the slaughter of animals, like blood meal, bone meal, feather meal, hides, hooves, and horns.

Soil amendments, like peat or coir, bark and sawdust can also be included.

Fertilizers can include without limitation, ammonium sulfate, ammonium nitrate, ammonium sulfate nitrate, ammonium chloride, ammonium bisulfate, ammonium polysulfide, ammonium thiosulfate, aqueous ammonia, anhydrous ammonia, ammonium polyphosphate, aluminum sulfate, calcium nitrate, calcium ammonium nitrate, calcium sulfate, calcined magnesite, calcitic limestone, calcium oxide, hampene (chelated iron), dolomitic limestone, hydrate lime, calcium carbonate, diammonium phosphate, monoammonium phosphate, potassium nitrate, potassium bicarbonate, monopotassium phosphate, magnesium nitrate, magnesium sulfate, potassium sulfate, potassium chloride, sodium nitrates, magnesian limestone, magnesia, disodium dihydromolybdate, cobalt chloride hexahydrate, nickel chloride hexahydrate, indole butyric acid, L-tryptophan, urea, urea-formaldehydes, urea ammonium nitrate, sulfur-coated urea, polymer-coated urea, isobutylidene diurea, K₂SO₄-2MgSO₄, kainite, sylvinite, kieserite, Epsom salts, elemental sulfur, marl, ground oyster shells, fish meal, oil cakes, fish manure, blood meal, rock phosphate, super phosphates, slag, bone meal, wood ash, biochar, algae, algae extract, struvite, manure, bat guano, peat moss, compost, green sand, cottonseed meal, feather meal, crab meal, fish emulsion or a combination thereof. The micronutrient fertilizer material can comprise boric acid, a borate, a boron frit, copper sulfate, a copper frit, a copper chelate, a sodium tetraborate decahydrate, an iron sulfate, an iron oxide, iron ammonium sulfate, an iron frit, an iron chelate, a manganese sulfate, a manganese oxide, a manganese chelate, a manganese chloride, a manganese frit, a sodium molybdate, molybdic acid, a zinc sulfate, a zinc oxide, a zinc carbonate, a zinc frit, zinc phosphate, a zinc chelate or a combination thereof. In a particular embodiment, said fertilizer or fertilizer composition does not comprise insoluble selenium, selenium mineral, soluble selenium or salts thereof.

The treated (inorganic, organic or organomineral) fertilizers according to the invention are preferably present in powder form, prill form or in granule form.

Besides the compound of the general formula (I) or (II), formulations comprising the compound and agronomical adjuvants can be used for including the P-booster in the fertilizer. Agronomical adjuvants are, for example, solvents, dispersants, pH-adjusting agents, fillers, stability improvers, surfactants.

The P-booster can be included in the fertilizer mixture by mixing it or the formulation containing it with a solid or liquid fertilizer or fertilizer formulation. Preferably, the fertilizer mixture is in solid form and the P-booster is applied to the surface of the (inorganic, organic or organomineral) fertilizer.

In a process for producing the fertilizer mixture of the present invention, the P-booster or the formulation containing it can be introduced into the (inorganic, organic or organomineral) fertilizer and/or applied to the surface of the fertilizer.

Granules of fertilizers are impregnated or coated with the P-booster, for example by being sprayed with a formulation like a solution or a dispersion of the P-booster and subsequent drying. The method is known, for example, from DE-A-41 28 828. The sealing of the impregnated granules with, for example, a paraffin wax, which is an additional proposal in the latter document, is possible, but generally unnecessary.

Granulating assistants which can be employed for preparing solid fertilizer compositions can be lime, gypsum, silicon dioxide or kaolinite.

An alternative is the addition of the nitrification inhibitor during the actual production of the fertilizer or in the slurry, for example.

As a rule, the P-boosters are customarily applied to the soil in amounts effective for the desired action.

Delivery of the P-booster in liquid fertilizer formulations may be accomplished, for example, by fertigation with or without excess water as described in DE-C-102 30 593.

The fertilizer mixture can contain at least one nitrification inhibitor. Preferably, this at least one further nitrification inhibitor is inhibiting ammonia-oxidizing bacteria (AOB) and is preferably selected from the group consisting of 2-(3,4-dimethyl-pyrazol-1-yl)-succinic acid, 3,4-dimethylpyrazole (DMP), 3,4-dimethylpyrazolephosphate (DMPP), dicyandiamide (DCD), 1H-1,2,4-triazole, 3-methylpyrazole (3-MP), 2-chloro-6-(trichloromethyl)-pyridine, 5-ethoxy-3-trichloromethyl-1,2,4-thiadiazol, 2-amino-4-chloro-6-methyl-pyrimidine, 2-mercapto-benzothiazole, 2-sulfanilamidothiazole, thiourea, sodium azide, potassium azide, 1-hydroxypyrazole, 2-methylpyrazole-1-carboxamide, 4-amino-1,2,4-triazole, 3-mercapto-1,2,4-triazole, 2,4-diamino-6-trichloromethyl-5-triazine, carbon bisulfide, ammonium thiosulfate, sodium tri-thiocarbonate, 2,3-dihydro-2,2-dimethyl-7-benzofuranol methyl carbamate and N-(2,6-dimethylphenyl)-N-(methoxyacetyl)-alanine methyl ester. Also nitrification inhibitors inhibiting ammonia-oxidizing archaea (AOA) can be employed together with the compound of general formula (I) or (II).

When the nitrification inhibitor is employed, the weight ratio of the compound of general formula (I) or (II) to the nitrification inhibitor is preferably 0.01 to 100 : 1, more preferably 0.1 to 10 : 1.

Furthermore, the fertilizer mixture can contain at least one urease inhibitor, which is preferably selected from N-n-butylthiophosphoric triamide (NBTPT) and/or N-n-propylthiophosphoric triamide (NPTPT). A urease inhibitor is typically added when the fertilizer contains urea. Urea nitrogen is liberated as ammonium by the action of urease, and the ammonium can undergo nitrification. Therefore, it can be advantageous to combine a urease inhibitor with the nitrification inhibitor.

If the compound of general formula (I) or (II) of the present invention is combined with N-n-butylthiophosphoric triamide (NBTPT) and/or N-n-propylthiophosphoric triamide (NPTPT), the weight ratio of P-booster(s) to urease inhibitor is preferably in the range of from 0.01 to 100 : 1, more preferably 0.1 to 10 : 1.

Thiophosphoric triamides are known to be relatively easily converted to the corresponding phosphoric triamides and thiophosphoric diamides as well as other metabolites. Since, generally speaking, moisture cannot be entirely excluded, thiophosphoric triamide and the corresponding phosphoric triamide are frequently present in a mixture with one another. In this specification, therefore, the term "(thio)phosphoric triamide" identifies not only the pure thiophosphoric triamides and phosphoric triamides, respectively, but also mixtures thereof.

According to the present invention, also mixtures of N-(n-butyl)thiophosphoric triamide and N-(n-)propylthiophosphoric triamide can be employed, as described in EP-A-1 820 788.

The fertilizer mixtures can contain other ingredients, like coatings, for example of inorganic or organic polyacids, which are described in US 6,139,596.

Furthermore, coatings of powders, prills and granules can be formed of inorganic material, such as sulfur- or mineral-based coatings, or with an organic polymer. Respective coatings are described in WO 2013/121384 on page 23, line 37 to page 24, line 16.

As stated above, the agrochemical formulations comprising the compounds of formula (I) or (II) are used in "effective amounts". This means that they are used in a quantity which allows to obtain the desired effect which is a (synergistic) increase of the health or growth of a plant but which does not give rise to any phytotoxic symptom on the treated plant.

For use according to the present invention, the agrochemical formulations comprising the compounds of formula (I) or (II) can be converted into the customary formulations, for example solutions, emulsions, suspensions, dusts, powders, pastes and granules. The use form depends on the particular intended purpose; in each case, it should ensure a fine and even distribution of the agrochemical formulations comprising the compounds of formula (I) or (II) to the present invention. The formulations are prepared in a known manner to the person skilled in the art.

The agrochemical formulations may also comprise auxiliaries which are customary in agrochemical formulations. The auxiliaries used depend on the particular application form and active substance, respectively. Examples for suitable auxiliaries are solvents, solid carriers, dispersants or emulsifiers (such as further solubilizers, protective colloids, surfactants and adhesion agents), organic and inorganic thickeners, bactericides, anti-freezing agents, anti-foaming agents, if appropriate colorants and tackifiers or binders (e.g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e.g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e.g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e.g. ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wetters, tackifiers, dispersants or emulsifiers) are alkali metal, alkaline earth metal and ammonium salts of aromatic sulfonic acids, such as ligninsulfonic acid, phenolsulfonic acid, naphthalenesulfonic acid, dibutylnaphthalene-sulfonic acid and fatty acids, alkylsulfonates, alkyl-arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquid and proteins, denatured proteins, polysaccharides (e.g. methylcellulose), hydrophobically modified starches, polyvinyl alcohols, polycarboxylates types, polyalkoxylates, polyvinylamines, polyvinylpyrrolidone and the copolymers therof. Examples for thickeners (i.e. compounds that impart a modified flowability to formulations, i.e. high viscosity under static conditions and low viscosity during agitation) are polysaccharides and organic and inorganic clays such as Xanthan gum.

A biostimulant is any substance or microorganism, in the form in which it is applied to plants, seeds or the root environment with the intention to stimulate natural processes of plants benefiting nutrient use efficiency and/or tolerate to abiotic stress, regardless of its nutrient content, or any combination of such substances and/or microorganisms intended for this use.

A plant biostimulant is any microorganism or substance based on natural resources, in the form in which it is applied to plants, seeds or the soil and any other substrate with the intention to stimulate natural processes of plants to benefit their nutrient use efficiency and/or their tolerance to stress, regardless of its nutrients content, or any combination of such substances and/or microorganisms intended for this use.

A 'pesticide' is something that prevents, destroys, or controls a harmful organism ('pest') or disease, or protects plants or plant products during production, storage and transport.

The term includes, amongst others: herbicides, fungicides, insecticides, acaricides, nematicides, molluscicides, rodenticides, growth regulators, repellents, rodenticides and biocides as well as plant protection products.

Plant protection products (PPP) are 'pesticides' that protect crops or desirable or target plants. They are primarily used in the agricultural sector but also in forestry, horticulture, amenity areas and in home gardens. They contain at least one active substance and have one of the following functions:
- protect plants or plant products against pests/diseases, before or after harvest;
- influence the life processes of plants (such as substances influencing their growth, excluding nutrients);
- preserve plant products;
- destroy or prevent growth of undesired plants or parts of plants.

They may also contain other components including safeners and synergists.

An active substance is any chemical, plant extract, pheromone or micro-organism (including viruses), that has action against 'pests' or on plants, parts of plants or plant products.

The most common use of pesticides is in the form of plant protection products (PPPs).

The term 'pesticide' is often used interchangeably with 'plant protection product', however, pesticide is a broader term that also covers non plant/crop uses, for example biocides.

Biocides, like herbicides, bactericides, molluscicides, algicides, phytotoxicants, fungicides, and their mixtures can be added.

Bactericides may be added for preservation and stabilization of the formulation. Examples for suitable bactericides are those based on dichlorophene and benzylalcohol hemi formal (Proxel^{®} from ICI or Acticide^{®} RS from Thor Chemie and Kathon^{®} MK from Rohm & Haas) and isothiazolinone derivatives such as alkylisothiazolinones and benzisothiazolinones (Acticide^{®} M BS from Thor Chemie). Examples for suitable anti-freezing agents are ethylene glycol, propylene glycol, urea and glycerin. Examples for anti-foaming agents are silicone emulsions (such as e.g. Silikon^{®} SRE, Wacker, Germany or Rhodorsil^{®}, Rhodia, France), long chain alcohols, fatty acids, salts of fatty acids, fluoroorganic compounds and agrochemical formulations comprising the compounds of formula (I) or (II) thereof.

Suitable colorants are pigments of low water solubility and solvent-soluble, e.g. water-soluble, dyes.

Examples for adhesion promoters, like tackifiers or binders, are polyvinylpyrrolidons, polyvinylacetates, polyvinyl alcohols and cellulose ethers (Tylose^{®}, Shin-Etsu, Japan).

Granules, e.g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e.g., ammonium sulfate, ammonium phosphate, ammonium nitrate, ureas, and products of vegetable origin, such as cereal meal, tree bark meal, wood meal and nutshell meal, cellulose powders and other solid carriers.

Anticaking agents like oils and/or waxes can be added.

The agrochemical formulations generally comprise between 0.01 and 95%, preferably between 0.1 and 90%, most preferably between 0.5 and 90%, by weight of active substances. The compounds of the agrochemical formulations comprising the compounds of formula (I) or (II) are employed in a purity of from 90% to 100%, preferably from 95% to 100% (according to their NMR spectrum).

The compounds of the agrochemical formulations comprising the compounds of formula (I) can be used as such or in the form of their agricultural compositions, e.g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compounds present in the agrochemical formulations comprising the compounds of formula (I) or (II).

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1%, by weight of compounds of the agrochemical formulations comprising the compounds of formula (I) or (II).

The compounds of the agrochemical formulations comprising the compounds of formula (I) or (II) may also be used successfully in the ultra-low-volume process (ULV), it being possible to apply compositions comprising over 95% by weight of active substance, or even to apply the active substance without additives.

Various types of oils, wetters, adjuvants, herbicides, fungicides, other pesticides, or bactericides may be added to the active compounds, if appropriate not until immediately prior to use (tank mix). These agents can be admixed with the compounds of the agrochemical formulations comprising the compounds of formula (I) or (II) in a weight ratio of 1:100 to 100:1, preferably 1:10 to 10:1.

Compositions of this invention may also contain fertilizers (such as ammonium nitrate, urea, potash, and superphosphate), phytotoxicants and plant growth regulators (plant growth amendments) and safeners. These may be used sequentially or in combination with the above-described compositions, if appropriate also added only immediately prior to use (tank mix). For example, the plant(s) may be sprayed with a composition of this invention either before or after being treated with the fertilizers.

In the agrochemical formulations comprising the compounds of formula (I) or (II)?, the weight ratio of the compounds generally depends from the properties of the compounds of the agrochemical formulations comprising the compounds of formula (I) or (II).

The compounds of the agrochemical formulations comprising the compounds of formula (I) can be used individually or already partially or completely mixed with one another to prepare the composition according to the invention. It is also possible for them to be packaged and used further as combination composition such as a kit of parts.

The user applies the composition according to the invention usually from a pre-dosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquid or the agrochemical composition according to the invention is thus obtained. Usually, 50 to 500 liters of the ready-to-use spray liquid are applied per hectare of agricultural useful area, preferably 50 to 400 liters.

In a particular embodiment the absolute amount of the active compounds, represented by formula (I) or (II), is used in a range between 1 mg/liter to 100 mg/liter, particularly in a range between 1 mg/l to 20 mg/l, particularly in a range between 1 mg/l to 25 mg/l, particularly in a range between 2 mg/l to 200 mg/l, particularly between 2 mg/l to 100 mg/l, particularly between 2 mg/l to 50 mg/l, particularly between 2 mg/l to 25 mg/l, particularly between 4 mg/l to 40 mg/l, particularly between 4 mg/l to 20 mg/l, particularly between 4 mg/l to 16 mg/l, particularly between 4 mg/l to 12 mg/l.

According to one embodiment, individual compounds of the agrochemical formulations comprising the compounds of formula (I) or (II) formulated as composition (or formulation) such as parts of a kit or parts of the inventive mixture may be mixed by the user himself in a spray tank and further auxiliaries may be added, if appropriate (tank mix).

"Agrochemical", as used herein, means any active substance that may be used in the agrochemical industry (including agriculture, horticulture, floriculture and home and garden uses, but also products intended for non-crop related uses such as public health/pest control operator uses to control undesirable insects and rodents, household uses, such as household fungicides and insecticides and agents, for protecting plants or parts of plants, crops, bulbs, tubers, fruits (e.g. from harmful organisms, diseases or pests); for controlling, preferably promoting or increasing, the growth of plants; and/or for promoting the yield of plants, crops or the parts of plants that are harvested (e.g. its fruits, flowers, seeds etc.).

An "agrochemical composition" as used herein means a composition for agrochemical use, as herein defined, comprising at least one active substance of a compound of formula (I), optionally with one or more additives favoring optimal dispersion, atomization, deposition, leaf wetting, distribution, retention and/or uptake of agrochemicals. As a non-limiting example such additives are diluents, solvents, adjuvants, surfactants, wetting agents, spreading agents, oils, stickers, viscosity-adjusting agents (like thickeners, penetrants), pH-adjusting agents (like buffering agents, acidifiers), anti-settling agents, anti-freeze agents, photo-protectors, defoaming agents, biocides and/or drift control agents.

A "carrier", as used herein, means any solid, semi-solid or liquid carrier in or on(to) which an active substance can be suitably incorporated, included, immobilized, adsorbed, absorbed, bound, encapsulated, embedded, attached, or comprised. Non-limiting examples of such carriers include nanocapsules, microcapsules, nanospheres, microspheres, nanoparticles, microparticles, liposomes, vesicles, beads, a gel, weak ionic resin particles, liposomes, cochleate delivery vehicles, small granules, granulates, nano-tubes, bucky-balls, water droplets that are part of an water-in-oil emulsion, oil droplets that are part of an oil-in-water emulsion, organic materials such as cork, wood or other plant-derived materials (e.g. in the form of seed shells, wood chips, pulp, spheres, beads, sheets or any other suitable form), paper or cardboard, inorganic materials such as talc, clay, microcrystalline cellulose, silica, alumina, silicates and zeolites, or even microbial cells (such as yeast cells) or suitable fractions or fragments thereof.

The terms "effective amount", "effective dose" and "effective amount", as used herein, mean the amount needed to achieve the desired result or results. More exemplary information about amounts, ways of application and suitable ratios to be used is given below. The skilled artisan is well aware of the fact that such an amount can vary in a broad range and is dependent on various factors such as the treated cultivated plant as well as the climatic and soil conditions.

As used herein, the terms "determining", "measuring", "assessing", "monitoring" and "assaying" are used interchangeably and include both quantitative and qualitative determinations.

It is understood that the agrochemical composition is stable, both during storage and during utilization, meaning that the integrity of the agrochemical composition is maintained under storage and/or utilization conditions of the agrochemical composition, which may include elevated temperatures, freeze-thaw cycles, changes in pH or in ionic strength, UV-irradiation, presence of harmful chemicals and the like. More preferably, the compounds of formula (I) or (II) as herein described remain stable in the agrochemical composition, meaning that the integrity and the activity of the compounds are maintained under storage and/or utilization conditions of the agrochemical composition, which may include elevated temperatures, freeze-thaw cycles, changes in pH or in ionic strength, UV-irradiation, presence of harmful chemicals and the like. Most preferably, said compounds of formula (I), (II) remain stable in the agrochemical composition when the agrochemical composition is stored at ambient temperature for a period of two years or when the agrochemical composition is stored at 54°C for a period of two weeks. Preferably, the agrochemical composition of the present invention retains at least about 70% activity, more preferably at least about 70% to 80% activity, most preferably about 80% to 90% activity or more. Examples of suitable carriers include, but are not limited to alginates, gums, starch, β-cyclodextrins, celluloses, polyurea, polyurethane, polyester, or clay.

The agrochemical composition may occur in any type of formulation, preferred formulations are powders, wettable powders, wettable granules, water dispersible granules, emulsions, emulsifiable concentrates, dusts, suspensions, suspension concentrates, suspoemulsions, capsule suspensions, aqueous dispersions, oil dispersions, aerosols, pastes, foams, slurries or flowable concentrates.

In yet another embodiment the invention provides the use of the agrochemical compositions of the invention for enhancing abiotic stress tolerance in plants.

The agrochemical composition according to the invention can be applied once to a crop, or it can be applied two or more times after each other with an interval between every two applications. The agrochemical composition according to the invention can be applied alone or in mixture with other materials, preferably other agrochemical compositions, to the crop; alternatively, the agrochemical composition according to the invention can be applied separately to the crop with other materials, preferably other agrochemical compositions, applied at different times to the same crop.

In yet another embodiment the invention provides a method for the manufacture of ('or the production of' which is equivalent wording) an agrochemical composition according to the invention, comprising formulating a molecule of formula (I) or (II) as defined herein before, together with at least one customary agrochemical auxiliary agent. Suitable manufacturing methods are known in the art and include, but are not limited to, high or low shear mixing, wet or dry milling, drip-casting, encapsulating, emulsifying, coating, encrusting, pilling, extrusion granulation, fluid bed granulation, co-extrusion, spray drying, spray chilling, atomization, addition or condensation polymerization, interfacial polymerization, in situ polymerization, coacervation, spray encapsulation, cooling melted dispersions, solvent evaporation, phase separation, solvent extraction, sol-gel polymerization, fluid bed coating, pan coating, melting, passive or active absorption or adsorption.

Customary agrochemical auxiliary agents are well-known in the art and preferably include, but are not limited to aqueous and/or organic solvents, pH-adjusting agents (like buffering agents, acidifiers), surfactants, wetting agents, spreading agents, adhesion promoters (like tackifiers, stickers), carriers, fillers, viscosity-adjusting agents (like thickeners), emulsifiers, dispersants, sequestering agents, anti-settling agents, coalescing agents, rheology modifiers, defoaming agents, photo-protectors, anti-freeze agents, additional or further biostimulants (including bacterial and/or fungal inoculants or microorganisms beside non-microbial materials), biocides (preferably selected from herbicides, bactericides, phytotoxicants, fungicides, pesticides/plant protection products and mixtures thereof), additional or further plant growth regulators, safeners, penetrants, anticaking agents, mineral and/or vegetable oils and/or waxes, colorants and drift control agents or any suitable combination thereof.

If the P-boosters are considered as biostimulants and/or plant growth regulators, the additional auxiliary agent can refer to additional or further biostimulants and/or plant growth regulators which are different from the P-boosters.

The *insecticide can include an organophosphate, a carbamate, a pyrethroid, an acaricide, an* alkyl phthalate, boric acid, a borate, a fluoride, sulfur, a haloaromatic substituted urea, a hydrocarbon ester, a biologically-based insecticide, or a combination thereof. The herbicide, used to remove unwanted plants, can comprise a chlorophenoxy compound, a nitrophenolic compound, a nitrocresolic compound, a dipyridyl compound, an acetamide, an aliphatic acide, an anilide, a benzamide, a benzoic acid, a benzoic acid derivative, anisic acid, an anisic acid derivative, a benzonitrile, benzothiadiazinone dioxide, a thiocarbamate, a carbamate, carbanilate, chloropyridinyl, a cyclohexenone derivative, a dinitroaminobenzene derivative, a fluorodinitrotoluidine compound, isoxazolidinone, nicotinic acide, isopropylamine, an isopropylamine derivative, oxadiazolinone, a phosphate, a phthalate, a picolinic acid compound, a triazine, a triazole, a uracil, a urea derivative, endothall, sodium chlorate, or a combination thereof. The fungicide can comprise a substituted benzene, a thiocarbamate, an ethylene bis dithiocarbamate, a thiophthalidamide, a copper compound, an organomercury compound, an organotin compound, a cadmium compound, anilazine, benomyl, cyclohexamide, dodine, etridiazole, iprodione, metlaxyl, thiamimefon, triforine, or a combination thereof. The fungal inoculant can comprise a fungal inoculant of the family Glomeraceae, a fungal inoculant of the family Claroidoglomeraceae, a fungal inoculant of the family Acaulosporaceae, a fungal inoculant of the family Sacculospraceae, a fungal inoculant of the family Entrophosporaceae, a fungal inoculant of the family Pacidsproraceae, a fungal inoculant of the family Diversisporaceae, a fungal inoculant of the family Paraglomeraceae, a fungal inoculant of the family Archaeosporaceae, a fungal inoculant of the family Geosiphonaceae, a fungal inoculant of the family Ambisporacea, a fungal inoculant of the family Scutellosproaceae, a fungal inoculant of the family Dentiscultataceae, a fungal inoculant of the family Racocetraceae, a fungal inoculant of the phylum Basidiomycota, a fungal inoculant of the phylum Ascomycota, a fungal inoculant of the phylum Zygomycota, a fungal inoculant of the genus *Glomus* or a combination thereof. The bacterial inoculant can include a bacterial inoculant of the genus *Rhizobium,* bacterial inoculant of the genus *Bradyrhizobium,* bacterial inoculant of the genus *Mesorhizobium,* bacterial inoculant of the genus *Azorhizobium,* bacterial inoculant of the genus *Allorhizobium,* bacterial inoculant of the genus *Burkholderia,* bacterial inoculant of the genus *Sinorhizobium,* bacterial inoculant of the genus *Kluyvera,* bacterial inoculant of the genus *Azotobacter,* bacterial inoculant of the genus *Pseudomonas,* bacterial inoculant of the genus *Azosprillium,* bacterial inoculant of the genus *Bacillus,* bacterial inoculant of the genus *Streptomyces,* bacterial inoculant of the genus *Paenibacillus,* bacterial inoculant of the genus *Paracoccus,* bacterial inoculant of the genus *Enterobacter,* bacterial inoculant of the genus *Alcaligenes,* bacterial inoculant of the genus *Mycobacterium,* bacterial inoculant of the genus *Trichoderma,* bacterial inoculant of the genus *Gliocladium,* bacterial inoculant of the genus *Klebsiella,* or a combination thereof.

Also, the mixture can comprise additionally at least one microorganism selected from the list consisting of *Bacillus subtilis* strain 713, *Bacillus amyloliquefaciens* MBI 600, *Bacillus pumillus* QST2808, *Pseudomonas fluorescens, Bradyrhizobium japonicum, Trichoderma vireus, Pseudomonas putida, Trichoderma harzianum Rifaistrain* T22, *Penicillium bilaii, Mesorhizobium, Azospirillum, Azotobacter vinelandii* and *Clostridium pasteurianum, Glomus* species.

The N compounds of general formula (I) or (II) employed according to the present invention can be employed in combination with these auxiliaries. The auxiliaries used depend on the particular application form and the active substance and preferably include solvents, solid carriers, dispersants or emulsifiers, such as solubilizers, protective colloids, surfactants and adhesion agents. Furthermore, organic and inorganic thickeners, bactericides, anti-freezing agents, anti-foaming agents, if appropriate, colorants and tackifiers or binders can be employed in combination with the nitrification inhibitors and in the fertilizer mixture. Suitable auxiliaries are discussed in WO 2013/121384 on pages 25 to 26.

Further possible preferred ingredients are oils, wetters, adjuvants, biostimulants, herbicides, bactericides, other fungicides and/or pesticides. They are for example discussed in WO 2013/121384 on pages 28/29.

The fertilizer mixtures are preferably in solid form, including powders, prills and granules. Furthermore, it is possible to deliver the nitrification inhibitor in the form of a formulation, solution or dispersion separately or simultaneously with a fertilizer.

For respective applications, reference can be made to US 6,139,596 and WO 2013/121384 as well as WO 2015/086823 and WO 2016/207210.

The present invention also relates to a method of fertilizing soils exploited agriculturally or horticulturally, wherein a fertilizer mixture containing compounds A and B
A. an inorganic and/or organic and/or organomineral fertilizer and
B. 10 to 10000 weight-ppm, based on the inorganic fertilizer, of a compound of general formula (I) or (II) as defined above,
   or compounds A and B separately, but within a period of 0 to 5 hours, preferably 0 to 1 hour, more preferably approximately at the same time,
   is applied to the soils.

In parallel with the improvement of the utilization of phosphorus and possibly nitrogen in the phosphorus and possibly ammonium- or urea-containing mineral, organic and organomineral fertilizers, the use of the P-boosters, according to the present invention, and of compositions containing them has the effect that there is an increase, in some cases considerably, in the yields and production of biomass of crop plants.

The plants to be treated or rooted in soil to be treated according to the invention are preferably selected from the group consisting of agricultural, silvicultural, ornamental and horticultural plants, each in its natural or genetically modified form. Preferably, non-transgenic agricultural plants are treated.

Preferred agricultural plants are field crops selected from the group consisting of potatoes, sugar beets, wheat, barley, rye, oat, sorghum, rice, maize, cotton, rapeseed, oilseed rape, canola, soybeans, peas, field beans, sunflowers, sugar cane; cucumbers, tomatoes, onions, leeks, lettuce, squashes; even more preferably the plant is selected from the group consisting of wheat, barley, oat, rye, soybean, maize, oilseed rape, cotton, sugar cane, rice and sorghum.

In a preferred embodiment of the invention, the plant to be treated is selected from the group consisting of tomato, potato, wheat, barley, oat, rye, soybean, maize, oilseed rape, canola, sunflower, cotton, sugar cane, sugar beet, rice, sorghum, pasture grass and grazed land.

In another preferred embodiment of the invention, the plant to be treated is selected from the group consisting of tomato, potato, wheat, barley, oat, rye, soybean, maize, oilseed rape, canola, sunflower, cotton, sugar cane, sugar beet, rice and sorghum.

In an especially preferred embodiment of the invention, the plants to be treated are selected from the group consisting of tomato, wheat, barley, oat, rye, maize, oilseed rape, canola, sugar cane, and rice.

In one embodiment, the plant to be treated according to the method of the invention is an agricultural plant. "Agricultural plants" are plants of which a part (e.g. seeds) or all is harvested or cultivated on a commercial scale or which serve as an important source of feed, food, fibres (e.g. cotton, linen), combustibles (e.g. wood, bioethanol, biodiesel, biomass) or other chemical compounds. Preferred agricultural plants are for example cereals, e.g. wheat, rye, barley, triticale, oats, sorghum or rice, beet, e.g. sugar beet or fodder beet; fruits, such as pomes, stone fruits or soft fruits, e.g. apples, pears, plums, peaches, almonds, cherries, strawberries, raspberries, blackberries or gooseberries; leguminous plants, such as lentils, peas, alfalfa or soybeans; oil plants, such as rapeseed, oilseed rape, canola, linseed, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as maize, soybean, rapeseed, canola, sugar cane or oil palm; tobacco; nuts; coffee; tea; bananas; vines (table grapes and grape juice grape vines); hop; turf; natural rubber plants.

Pasture grass and grassland are composed of grass or grass mixtures comprising for example Bluegrass (Poa spp.), Bentgrass (Agrostis spp.), Ryegrasses (Lolium spp.), Fescues (Festuca spp., hybrids, and cultivars), Zoysiagrass (Zoysia spp.), Bermudagrass (Cynodon spp.), St. Augustine grass, Bahiagrass (Paspalum), Centipedegrass (Eremachloa), Carpetgrass (Axonopus), Buffalograss and Grama grass. Pastures may be also composed of mixtures comprising afore mentioned grasses, for example Ryegrass, and Trifolium species, for example Trifolium pratensis and Trifolium repens, Medicago species like Medicago sativa, Lotus species like Lotus corniculatus, and Melilotus species, for example Melilotus albus.

In one embodiment, the plant to be treated according to the method of the invention is a horticultural plant. The term "horticultural plants" are to be understood as plants which are commonly used in horticulture - e.g. the cultivation of ornamentals, herbs, vegetables and/or fruits. Examples for ornamentals are turf, geranium, pelargonia, petunia, begonia and fuchsia. Examples for vegetables are potatoes, tomatoes, peppers, cucurbits, cucumbers, melons, watermelons, garlic, onions, carrots, cabbage, beans, peas and lettuce and more preferably from tomatoes, onions, peas and lettuce. Examples for fruits are apples, pears, cherries, strawberry, citrus, peaches, apricots and blueberries. In horticulture, often a substrate replaces (part of) the soil.

In one embodiment, the plant to be treated according to the method of the invention is an ornamental plant. "Ornamental plants" are plants which are commonly used in gardening, e.g. in parks, gardens and on balconies. Examples are turf, geranium, pelargonia, petunia, begonia and fuchsia.

In one embodiment, the plant to be treated according to the method of the invention is a silvicultural plant. The term "silvicultural plant" is to be understood as trees, more specifically trees used in reforestation or industrial plantations. Industrial plantations generally serve for the commercial production of forest products, such as wood, pulp, paper, rubber tree, Christmas trees, or young trees for gardening purposes. Examples for silvicultural plants are conifers, like pines, in particular Pinus spec, fir and spruce, eucalyptus, tropical trees, like teak, rubber tree, oil palm, willow (Salix), in particular Salix spec, poplar (cottonwood), in particular Populus spec, beech, in particular Fagus spec, birch, oil palm, and oak.

The following definitions apply:
The term "P-booster" is to be understood as compounds of formula (I) that improve the phosphorus acquisition and/or use of the plants treated therewith, and/or can lead to improved plant growth.

The term "plants" is to be understood as plants of economic importance and/or men-grown plants. They are preferably selected from agricultural, silvicultural, ornamental and horticultural plants, each in its natural or genetically modified form. The term "plant" as used herein includes all parts of a plant, such as germinating seeds, emerging seedlings, herbaceous vegetation, as well as established woody plants, including all belowground portions (such as the roots) and aboveground portions.

The term "soil" is to be understood as a natural body comprised of living (e.g. microorganisms (such as bacteria and fungi), animals and plants) and non-living matter (e.g. minerals and organic matter (e.g. organic compounds in varying degrees of decomposition), liquid, and gases) that occurs on the land surface, and is characterized by soil horizons that are distinguishable from the initial material as a result of various physical, chemical, biological, and anthropogenic processes.

The term "nitrification inhibitor" is to be understood as any chemical substance which slows down or retards the nitrification process which is typically occurring in (fertilized) soil. Nitrification inhibitors retard the natural transformation of ammonium into nitrate and target microorganisms and preferably ammonia-oxidizing bacteria (AOB), preferably by inhibiting the activity of the bacteria, such as *Nitrosomonas spp.* and/or *Nitrosospira spp.* They may additionally act on ammonia-oxidizing archaea (AOA). The nitrification inhibitor is most often combined with a fertilizer, preferably an (ammonium) nitrogen-containing fertilizer, e.g. solid or liquid inorganic, organic and/or organomineral fertilizer, or manure.

The term "nitrification" is to be understood as the biological oxidation of ammonia (NH₃) or ammonium (NH₄⁺) with oxygen into nitrite (NO₂⁻) followed by the oxidation of these nitrites into nitrates (NO₃⁻) by microorganisms. Besides nitrate (NO₃⁻) nitrous oxide is also produced though nitrification. Nitrification is an important step in the nitrogen cycle in soil.

The term "fertilizers" is to be understood as (chemical) compounds applied to promote plant and fruit growth. Fertilizers are typically applied either through the soil (for uptake by plant roots) or by foliar feeding (for uptake through leaves). The term "fertilizers" can be subdivided into two major categories: a) organic fertilizers (composed of decayed plant/animal matter) and b) inorganic fertilizers (composed of chemicals and minerals). Organic fertilizers include slurry, worm castings, peat, seaweed, sewage, and guano. Manufactured organic fertilizers include compost, blood meal, bone meal and seaweed extracts. Further examples are enzymatically digested proteins, fish meal, and feather meal. The decomposing crop residue from prior years and manure are another source of fertility. In addition, naturally occurring minerals, such as mine rock phosphate, sulfate of potash and limestone, are also considered as belonging to inorganic fertilizers. Inorganic fertilizers are usually manufactured through chemical processes (such as the Haber-Bosch process), also using naturally occurring deposits, while chemically altering them (e.g. concentrated triple superphosphate). Naturally occurring inorganic fertilizers include Chilean sodium nitrate, mine rock phosphate, and limestone. As a third category organomineral fertilizers can be mentioned, as a combination of inorganic and organic fertilizers.

The term "fertilizer comprising urea" (urea fertilizer) is defined as synthetic fertilizers comprising urea, excluding any naturally occurring fertilizers comprising urea (for instance manure as an example for a naturally occurring fertilizer comprising urea). Examples of fertilizer comprising urea are urea ammonium nitrate (UAN), isobutylidene diurea (IBDU), crotonylidene diurea (CDU) and urea formaldehyde (UF). Urea is usually made as granulated material or prills. Urea fertilizer can be produced by dropping the liquid urea from a prill tower while drying the product. Urea can also be obtained as a liquid formulation, which may be used for foliar application, e.g. on potatoes, wheat, vegetables and soybeans as well as liquid application to the field. It is commonly mixed with ammonium nitrate to form UAN with 28% N.

The term "locus" (plant habitat) is to be understood as any type of environment, soil, area or material where the plant is growing or intended to grow. Especially preferred according to the invention is soil.

The invention is further illustrated by the following examples which show that the the compounds of formula (I) are strong P-boosters.

### Examples

We report on a substance that suppresses *Arabidopsis* SPX1 and promotes plant growth in phosphate starvation conditions. We validate its positive effect on plant growth in diverse plants, and show that the activity of this substance is retained in a number of variants, which structurally characterize the class of molecules with this activity.
These results show that the use of SPX genes as a biomarker to screen for SPX suppressing molecules is a potent approach to discover new plant growth promoting or phosphate stress reducing substances.

### I. Materials and methods

### 1. Plant material and growth conditions

All *Arabidopsis* plant experiments were performed using the *Arabidopsis thaliana* Columbia-0 background. The *Arabidopsis* pSPX1::GUS line is described in the Planet Journal 2008, 54: 965-975. For rice, the cultivar Nipponbare was used. For maize, the cultivars DKC 2931 and B104 were used for regular pot experiments and sand-based pot experiments, respectively. For soybean, the cultivar Primus was used. Medium-based plant experiments used a modified Murashige and Skoog medium (modMS - 20 mM NH₄NO₃, 0.1 mM H₃BO₃, 3 mM CaCl₂, 0.1 µM CoCl₂*6H₂O, 0.1 µM CuSO₄*5H₂O, 0.1 mM Na₂EDTA*2H₂O, 0.1 mM FeSO₄*7H₂O, 1.5 mM MgSO₄*7H₂O, 0.1 mM MnSO₄*H₂O, 1 µM Na₂MoO₄*4H₂O, 5 µM KI, 19 mM KNO₃, 0.03 mM ZnSO₄*7H₂O, 0.1 g/L myo-inositol and 0.5 g/L MES (pH 5,7)), or a regular half strength Murashige and Skoog medium (MS1/2) with 300 µM phosphate (low phosphate: 300 µM KH2PO4, 9.9 mM KCI), 600 µM phosphate (suboptimal phosphate: 600 µM KH₂PO₄, 9.6 mM KCI) or 1,25 mM phosphate (high phosphate: 1.25 mM KH₂PO₄), except when stated otherwise. The medium was solidified due to the addition of 0,6% Gelrite, unless stated otherwise. In case of vertical plates (root length and root hair measurements), the medium was supplied with 0.5% of sucrose and 1 µM (low phosphate, 1 µM KH₂PO₄, 9.9 mM KCI), 10 µM (low phosphate 10 µM KH₂PO₄, 9.9 mM KCI) or 1.25 mM KH₂PO₄ (high phosphate). Arabidopsis seeds were stratified for 2 days at 4 °C before germination. Seedlings were germinated in climate-controlled growth chambers at 22 °C under continuous light (100 µmol m⁻² s⁻¹). Husked rice seeds were germinated on wetted Whatman paper for 2 days at 37 °C and then transferred to Sterivent boxes or square Petri dishes with solid medium. Maize and soybean seeds were wetted 24 hours at room temperature prior to sowing in pots.

### 2. Chemical activity assessment

For the chemical activity assessment 3 to 8 seeds per well of *Arabidopsis* pSPX1::GUS line were sown in 96-well plates containing 150 µl of low phosphate modMS liquid medium containing 1% of sucrose. Compounds were added in 50 µM concentration, starting from a 5 mM stock of compounds solved in DMSO. Different chemical substances were separately added to different wells. Per plate, 16 control wells were used, 8 containing only the low phosphate medium and 1% DMSO, and 8 containing high phosphate medium and 1% DMSO. 7 days after germination, plates were scanned using a flatbed scanner (EPSON Expression 11000XL) and analyzed for leaf size. After scanning, the growth medium was replaced by GUS staining solution (see Plant Mol. Biol. Rep. 1994, 12: 37-42 for details) and incubated for 1.5 hours at 37 °C. The plates were scanned a second time and analyzed for GUS signal area. Measurements of both leaf area and GUS signal area were conducted by filtering out and measure the green and blue signal, respectively using ImageJ software. If the green leaf area was 50% or less than the control, samples were omitted. Additionally, all results were visually screened for leaf size and GUS signal.

### 3. Growth assays

*Arabidopsis* primary root growth experiments were done on MS1/2 on vertical standing plates and roots were measured 11 days after germination. Roots were imaged using a flatbed scanner (EPSON Expression 11000XL) and root length was measured using ImageJ software. *Arabidopsis* shoot biomass was determined in 11 days after germination and growth on vertical standing plates with modMS. *Arabidopsis* leaf area was measured 21 days after germination on horizontal plates with modMS medium. Plates were scanned from the top using a flatbed scanner (EPSON Expression 11000XL) and the visible leaf area was measured using ImageJ software. Rice plate experiments used vertically standing Petri dishes containing MS1/2 medium (low phosphate - 0.001 mM) solidified with 0.8% washed agar. Plant height was measured 11 days after germination. Rice box experiments used modMS medium and a low phosphate condition of 0.025 mM phosphate. Plant height was measured 13 days after germination. All growth experiments occurred with 10 µM of compound and in low phosphate conditions, unless stated otherwise. Controls always received the same DMSO concentration.

### 4. Pot experiments

Regular Arabidopsis and maize pot experiments used an unfertilized potting soil, which was supplemented at the start of the experiment with 50 ml H₂O containing 0.25 g/l NH₄NO₃ and 0.44 g/l (high phosphate) or no (maize and soybean) or 0.11 g/l KH₂PO (Arabidopsis) for low phosphate conditions. For the sand-based maize pot experiment, sand was supplemented with 50 ml H₂O containing 0.25 g/l NH₄NO₃ and 0.38 g/l (high phosphate) or 0.02 g/l (low phosphate) KH₂PO₄. Potassium was balanced via addition of KCI. Compound concentration was 10 µM, calculated based on the total water content after watering, and was added at the start of the experiment (Arabidopsis) or once a week (maize). Indexed chlorophyll contents were received via a SPAD 502 Plus Chlorophyll Meter. All parameters in the sand experiment, except the rate of leaf 4 (measured the first 4 days after emergence), were measured 19 days after sowing. Measurements in the pot experiments with potting soil were done after 4 weeks of growth, except for leaf 5, which was measured at 26 days. s. *The long term maize pot experiment was performed on the automated Phenovision platform (see Mertens et al, 2021, 20 https.l*/*doi.org*/*10.3389*/*fpls.2021.640914) with maize cultivars B104 and DKC2931. End point measurements occurred after 90 days (B104) or 70 days (DKC2931). Plants were grown on an unfertilized potting soil, which was fertilized bi-weekly with 50 mL modified Hoagland solution (2.5 x concentrated; but with 0.25 mM KH2PO4.).*

### 5. Phosphate quantification

Col-0 ecotype *Arabidopsis* seeds were sown in 96-well plates containing 150 µl of low phosphate modMS liquid medium containing 1% of sucrose. Compounds was added in 50 µM concentration (1% DMSO). 7 days after germination, plates were scanned using a flatbed scanner (EPSON Expression 11000XL) and wells containing non-germinated seedlings were excluded from the following analysis. Plants were removed from each well and 50 µl of medium was recovered from each well and used for molybdenum blue staining as described in Plant Physiology 2008, 146:1673-1686. To measure the phosphate level in soil, Olsen P extraction was used on 1g of air dried soil, 500ul of extract was used for molybdenum blue staining as described in The Plant cell 2013, 25:1641-1656. Values were expressed relative to the low phosphate control.

### 6. Anthocyanin extraction and quantification

Col-0 ecotype *Arabidopsis* seeds were sown in 96-well plates containing 150 µl of low phosphate modMS liquid medium containing 1% of sucrose. Compounds was added in 50 µM concentration (1% DMSO). Eight plants per repeat were collected 7 days after germination and put into a fresh Eppendorf. Extraction and quantification of anthocyanin levels was carried out according to The Plant cell 2013, 25:1641-1656. Anthocyanin levels were quantified by measuring absorption at 530 and 657 nm using a spectrophotometer and normalized to fresh weight input, and expressed relative to the low phosphate control. For pot experiments, the same procedure was followed with one 4-week old plant per sample.

### 7. Root hair length quantification

Roots were imaged using a stereomicroscope or a VHX-6000. Number and length of the root hairs parallel to the medium surface was determined at 4 to 6 mm above the root meristem. Root hair length was measured using the ImageJ software.

### II. Results

### 1. Compound 4 reduces phosphate starvation

To identify new substances that suppress the expression of the SPX1 phosphate starvation biomarker, we used an *Arabidopsis* SPX1 reporter line pSPX1::GUS. After 7 days of growth in low phosphate conditions, the SPX1 biomarker, visualized by blue GUS staining, is typically clearly induced in the roots. But the molecule named compound 4 practically completely suppressed the SPX1 biomarker, and hence reduces phosphate starvation response. This observation was confirmed in two experimental repeats.

### 2. The Application of compound 4 reduces phosphate starvation stress

A typical plant responses towards phosphate deficiency is growth inhibition of the primary root. To confirm the reduction of the phosphate starvation effect by compound 4, its effect on primary root growth was evaluated in *Arabidopsis.*

Upon treatment with 10 µM compound 4, the primary root length of 11-day-old *Arabidopsis* plants grown in low phosphate is almost double the length of the control without compound (Table 1). These observation shows that compound 4 reduces the phosphate starvation response.

**Table 1: Parameters related to phosphate starvation stress or growth are affected by compound 4. Control indicates low phosphate conditions without compound (but with compound solvent), unless stated otherwise.**

| Plant and growth system | Parameter | Treatment | |
|---|---|---|---|
| | | Control | Compound 4 |
| Arabidopsis vertical plate | Primary root length (cm) | 1.8 | 3.8 |
| | Shoot biomass (mg) | 11 | 26 |
| Arabidopsis horizontal plate | Leaf area (mm²) | 78 | 91 |
| | Leaf area (mm²) in suboptimal phosphate conditions | 104 | 151 |
| Arabidopsis pot | Rosette size (cm²) | 17 | 19 |
| Rice plate | Plant height (cm) | 14.4 | 15.8 |
| Rice box | Plant height (cm) | 1.1 | 5.1 |
| Maize sand | Plant height (cm) | 21 | 26 |
| | Growth rate of leaf 4 (cm/day) | 2.04 | 2.3 |
| | Crown root number | 2 | 7 |
| Maize pot | Shoot weight (g) | 4 | 4.4 |
| | Plant height (cm) | 57 | 62 |
| | Leaf 5 (cm) | 40 | 45 |
| Maize pot (long term - B104) | Biomass (g) | 28 | 29 |
| | Plant height (cm) | 708 | 689 |
| | Sum of leaf length (cm) | 5431 | 5473 |
| | Plants with developed ears (%) | 31 | 54 |
| Maize pot (long term - DKC2931) | Biomass (g) | 27 | 31 |
| | Plant height (cm) | 941 | 1013 |
| | Sum of leaf length (cm) | 3595 | 3894 |
| | Plants with developed ears (%) | 100 | 100 |

### 3. The Application of compound 4 leads to improve plant growth

To further validate the positive effect of compound 4, growth experiments were performed in different growing systems and using different plant species. In different experiments, compound 4 showed a clear positive effect on the shoot biomass, leaf area or plant height in *Arabidopsis,* rice, soybean and maize, both in plate, box or pot experiments, and in maize, ear formation was stimulated (Table 1).

### 4. A set of compound 4-related molecules retains activity and reduces phosphate starvation

To explore the chemical space of the new phosphate fertilizer enhancer, a variety of structural homologs of compound 4 were characterized by evaluating their effect on the *SPX1* phosphate starvation biomarker and/or on root hair development (Table 2). This shows that structures with the general formula (I) retain compound 4 activity and reduce phosphate starvation.

Finally, we identified a number of molecules that fits the formula (I) and effectively suppressed the SPX1 biomarker in the primary screen. This gives numerous examples of molecules included in the claimed class that show phosphate starvation stress reducing activity.

Table 2 + 3: Compound 4 and structural variants and their effect on *SPX1* suppression (as represented by the GUS stained area) and/or total root hair length. NA: data not available

**Table 2**

| Structure | Compound Code | GUS (SPX1) stained area normalized to the number of seeds (pixels) | Average GUS (SPX1) stained area normalized to the number of seeds of low phosphate controls in the same plate (pixels) | Primary root length (in % versus control) |
|---|---|---|---|---|
| 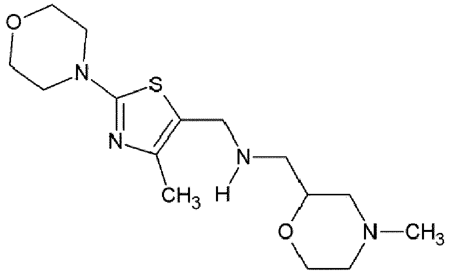 | 4 | 9 | 281 | 211% |
| 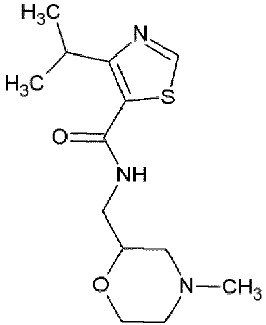 | 4.4 | 106 | 563 | |
| 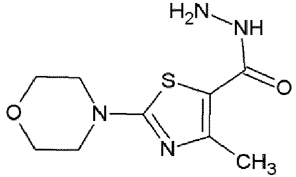 | 4.1 | NA | | 118% |
| 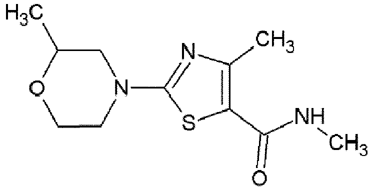 | 4.3 | NA | | 122% |

**Table 3**

| Structures | GUS (SPX1) stained area normalized to the number of seeds (pixels) | Average GUS (SPX1) stained area normalized to the number of seeds of low phosphate controls in the same plate (pixels) |
|---|---|---|
| 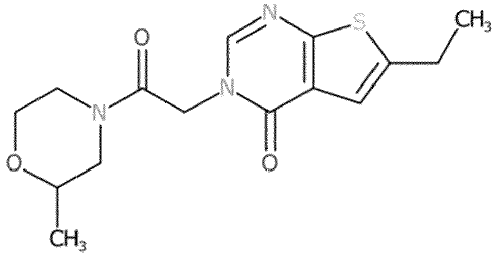 | 0 | 1446 |
| 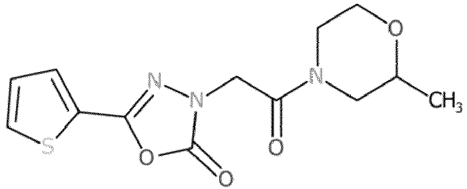 | 0 | 257 |
| 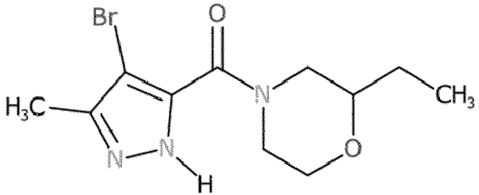 | 0 | 440 |
| 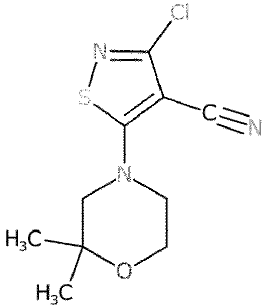 | 0 | 571 |
| 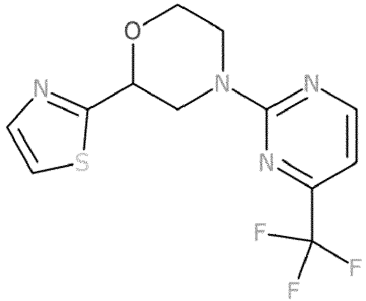 | 0 | 649 |
| 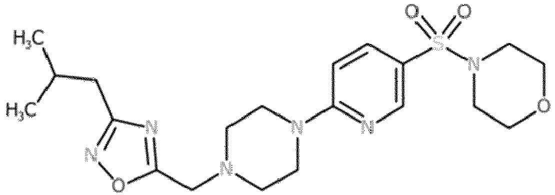 | 0 | 749 |
| 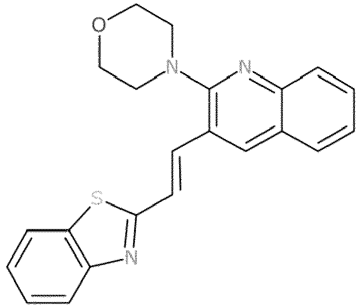 | 0 | 930 |
| 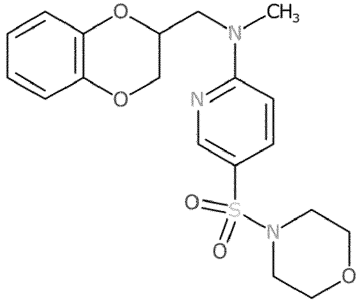 | 0 | 930 |
| 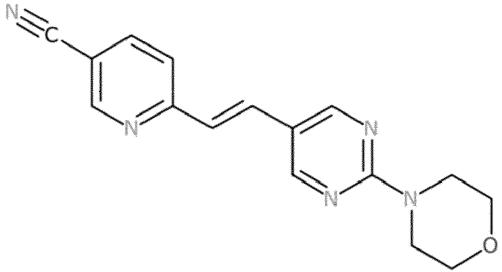 | 0 | 2053 |
| 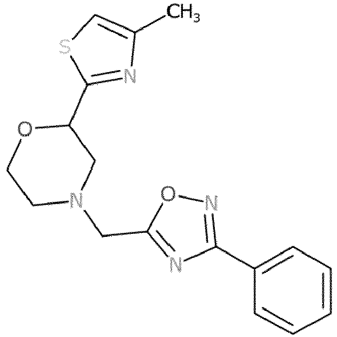 | 0 | 705 |
| 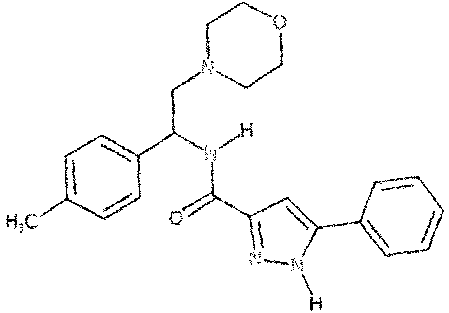 | 0 | 1433 |
| 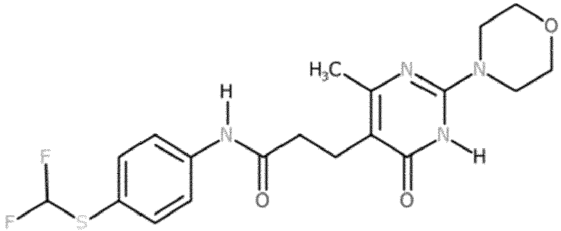 | 0 | 1311 |
| 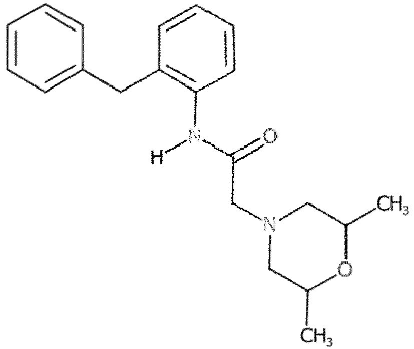 | 0 | 1246 |
| 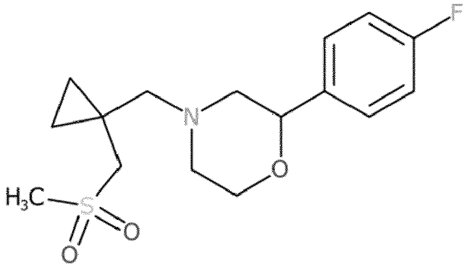 | 0 | 1266 |
| 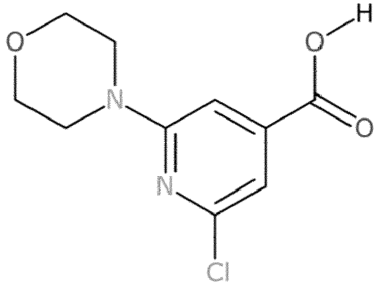 | 0 | 502 |
| 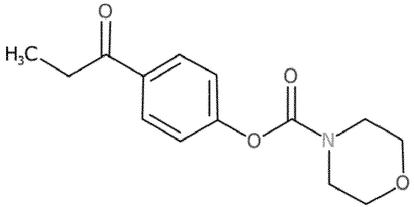 | 0 | 769 |
| 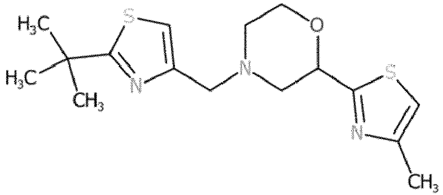 | 1 | 989 |
| 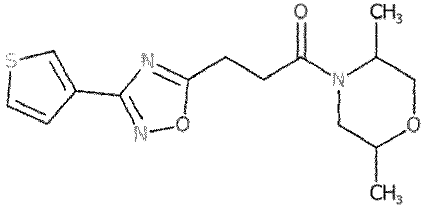 | 1 | 1414 |
| 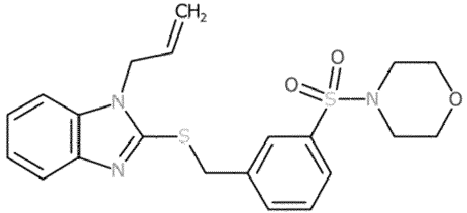 | 1 | 1004 |
| 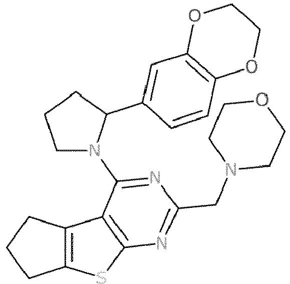 | 1 | 2549 |
| 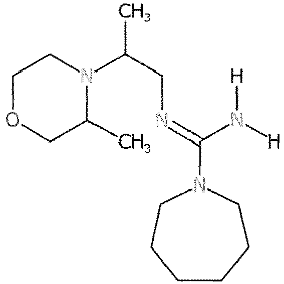 | 1 | 338 |
| 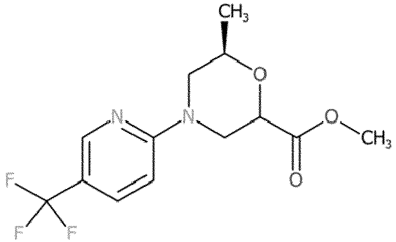 | 1 | 837 |
| 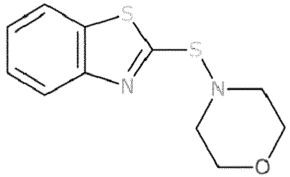 | 1 | 2326 |
| 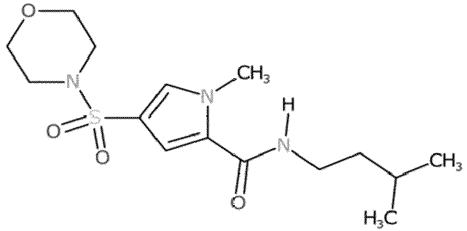 | 1 | 681 |
| 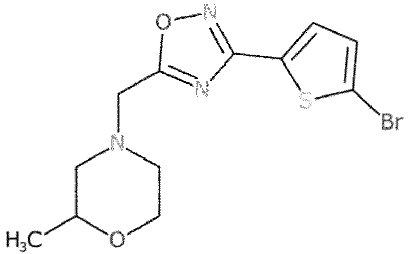 | 1 | 2525 |
| 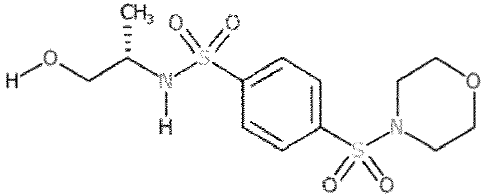 | 1 | 1416 |
| 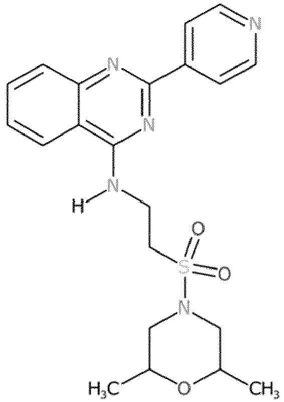 | 1 | 1989 |
| 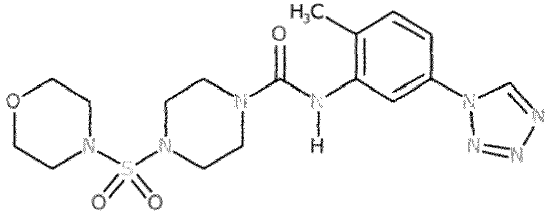 | 1 | 1483 |
| 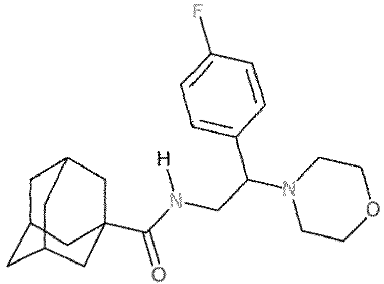 | 1 | 848 |
| 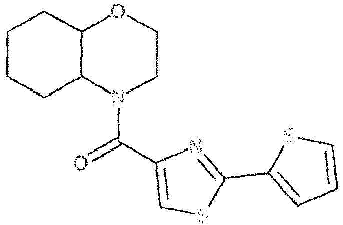 | 2 | 969 |
| 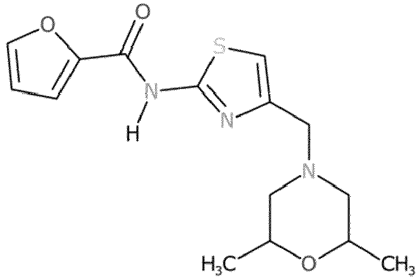 | 2 | 847 |
| 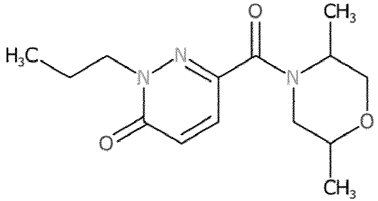 | 2 | 1004 |
| 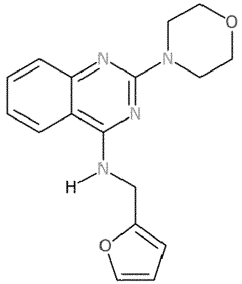 | 2 | 2091 |
| 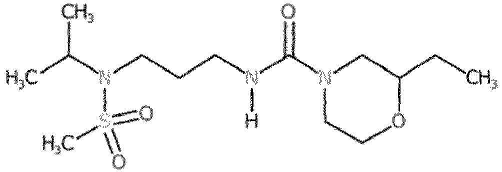 | 2 | 281 |
| 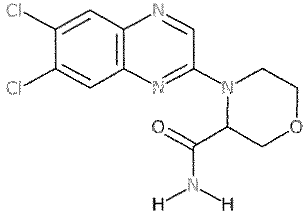 | 3 | 801 |
| 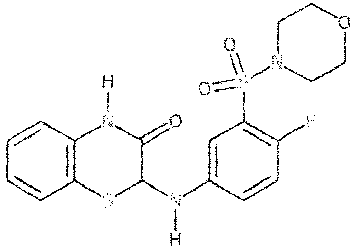 | 3 | 1274 |
| 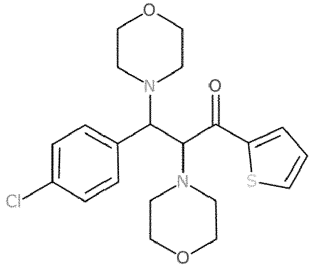 | 3 | 2549 |
| 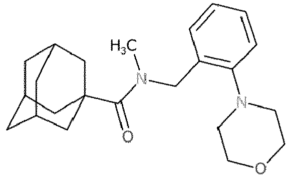 | 3 | 1202 |
| 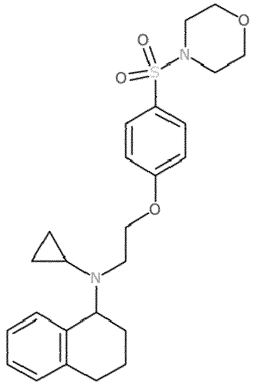 | 3 | 1659 |
| 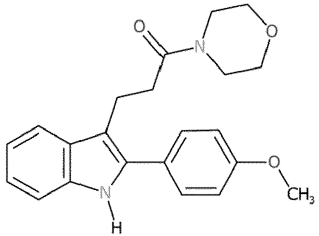 | 3 | 1385 |
| 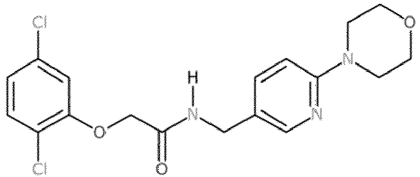 | 3 | 2164 |
| 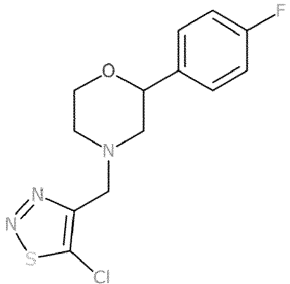 | 3 | 257 |
| 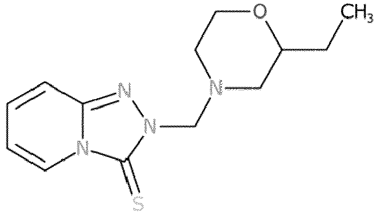 | 3 | 1387 |
| 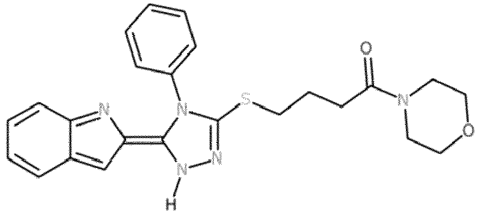 | 4 | 1839 |
| 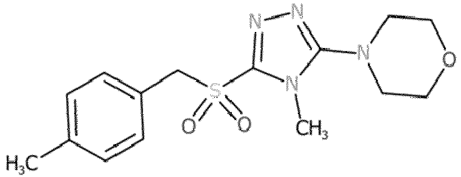 | 4 | 1355 |
| 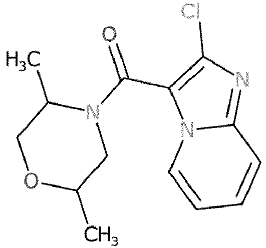 | 4 | 743 |
| 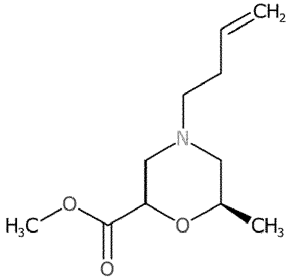 | 5 | 320 |
| 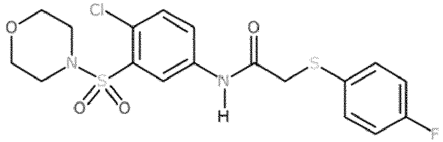 | 5 | 1629 |
| 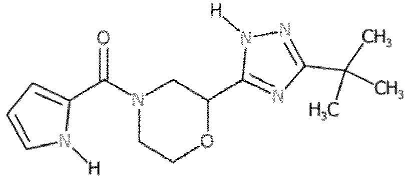 | 5 | 1212 |
| 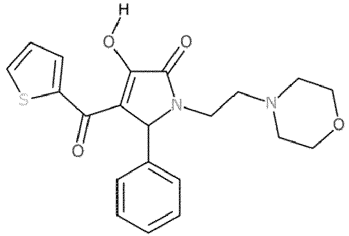 | 5 | 1312 |
| 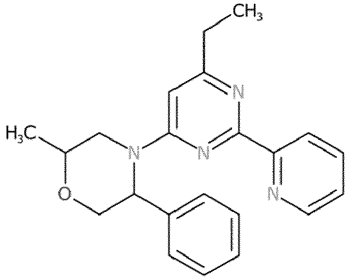 | 5 | 1369 |
| 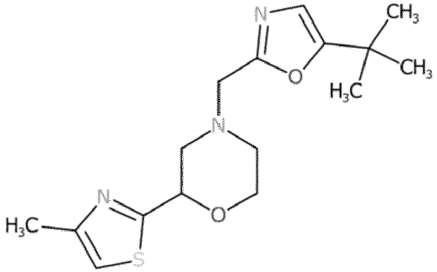 | 5 | 232 |
| 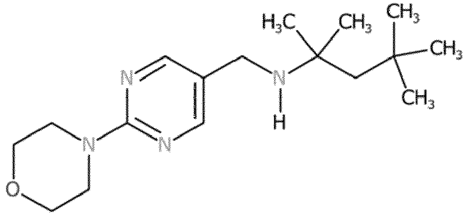 | 5 | 1306 |
| 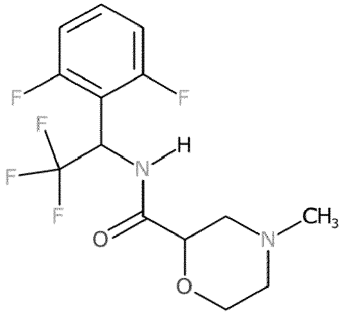 | 5 | 867 |
| 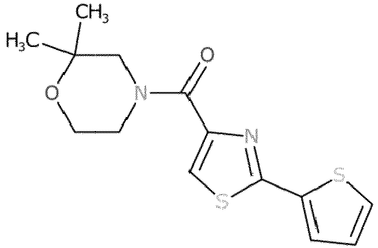 | 6 | 616 |
| 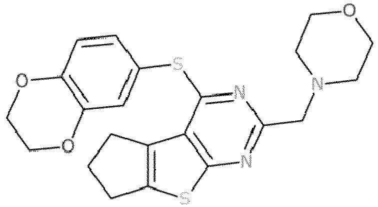 | 6 | 386 |
| 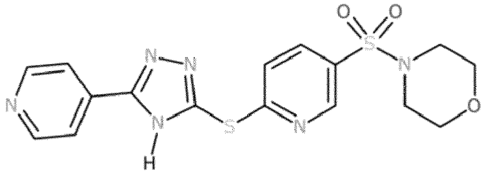 | 6 | 1274 |
| 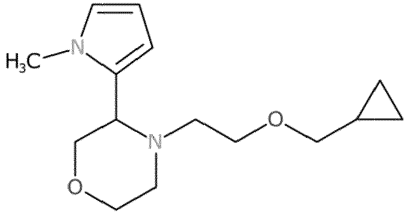 | 6 | 273 |
| 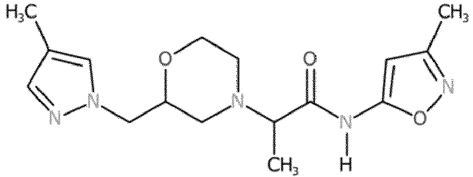 | 7 | 1465 |
| 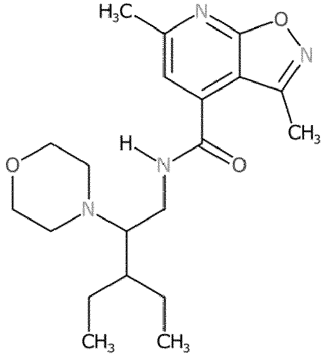 | 7 | 1160 |
| 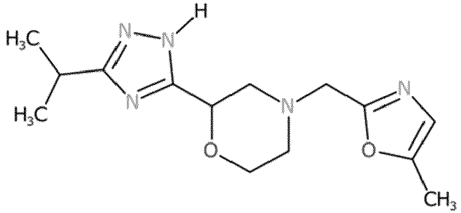 | 7 | 1104 |
| 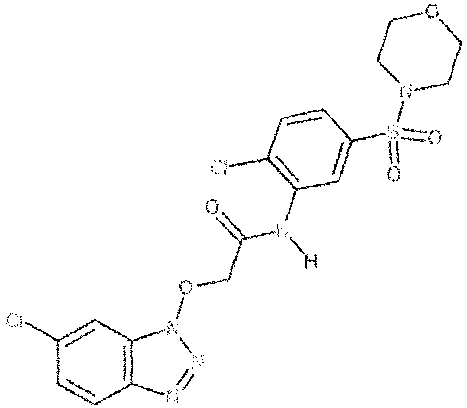 | 7 | 1067 |
| 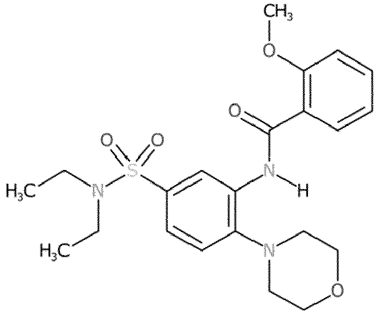 | 7 | 1752 |
| 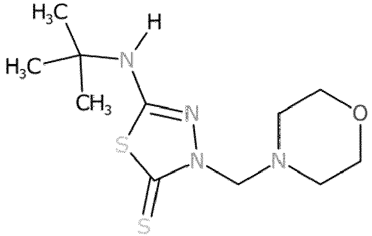 | 7 | 1170 |
| 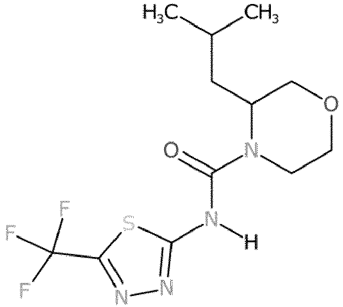 | 7 | 956 |
| 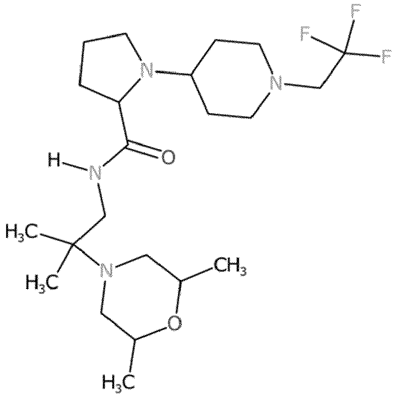 | 7 | 338 |
| 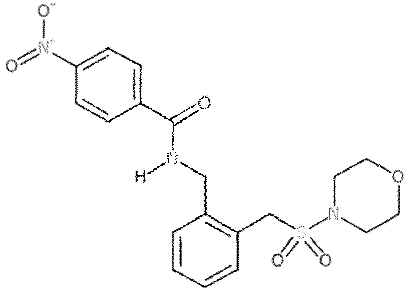 | 7 | 2432 |
| 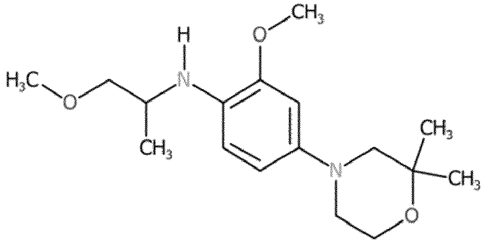 | 7 | 837 |
| 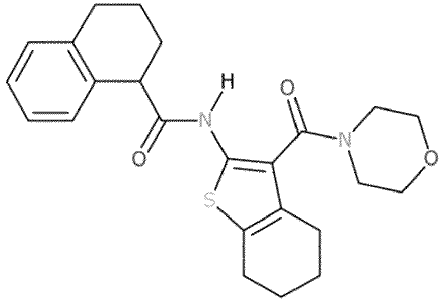 | 8 | 1514 |
| 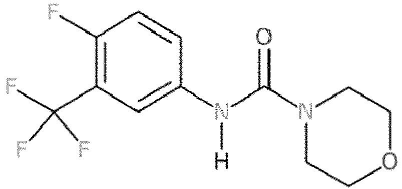 | 8 | 806 |
| 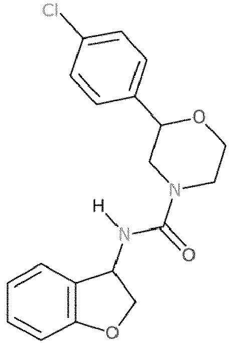 | 8 | 1544 |
| 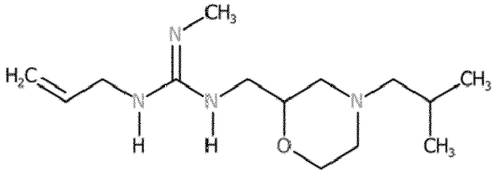 | 8 | 590 |
| 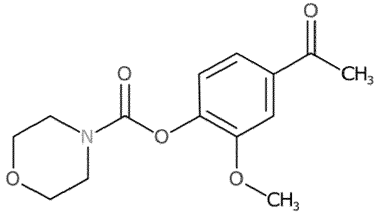 | 8 | 769 |
| 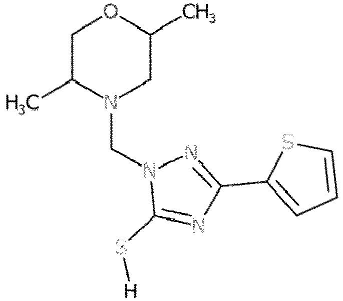 | 9 | 1788 |
| 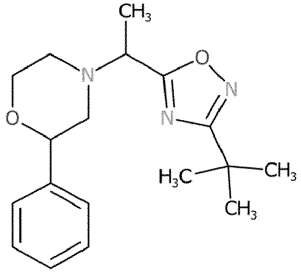 | 9 | 87 |
| 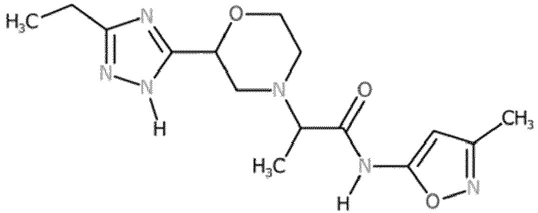 | 9 | 214 |
| 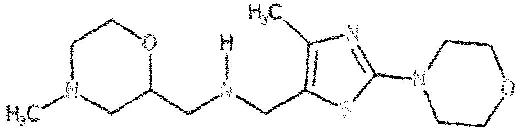 | 9 | 281 |
| 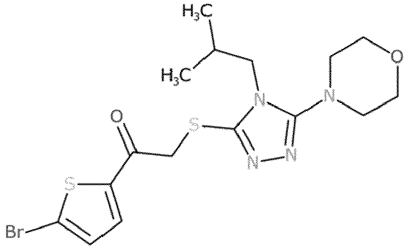 | 9 | 1689 |
| 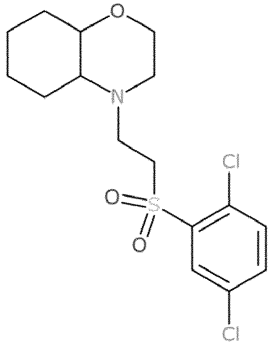 | 9 | 2016 |
| 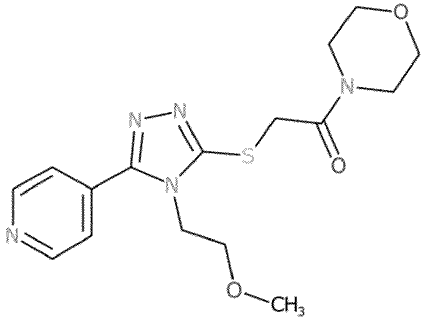 | 9 | 1752 |
| 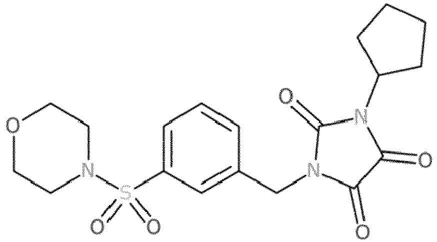 | 9 | 1359 |
| 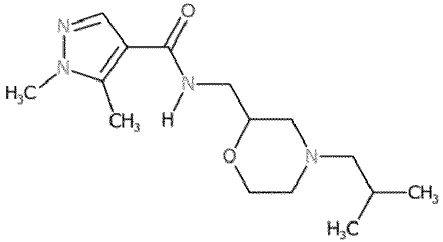 | 9 | 668 |
| 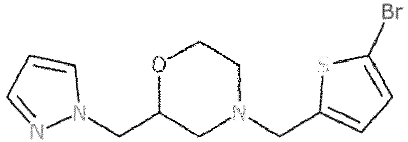 | 10 | 806 |
| 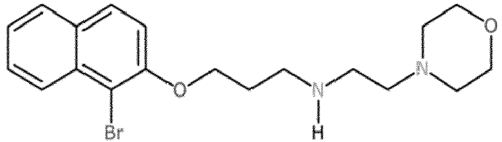 | 10 | 1001 |
| 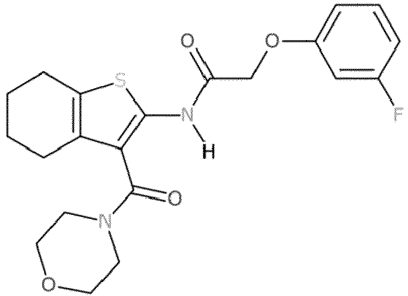 | 10 | 2497 |
| 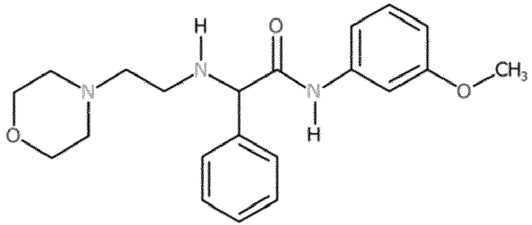 | 10 | 1700 |
| 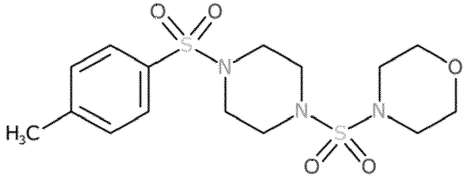 | 10 | 1515 |
| 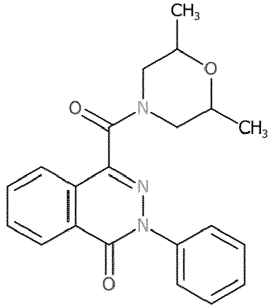 | 10 | 706 |
| 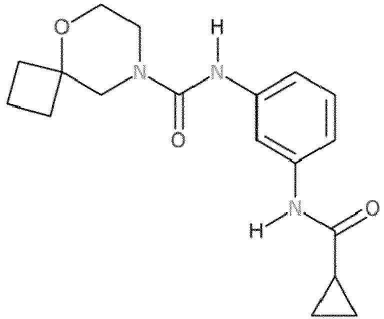 | 11 | 1306 |
| 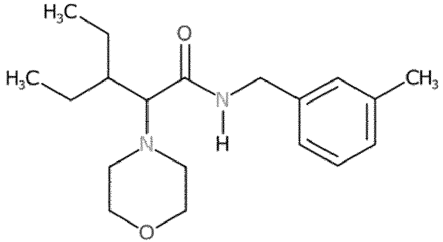 | 11 | 1307 |
| 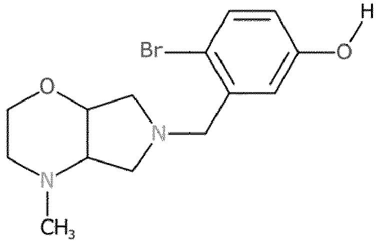 | 12 | 478 |
| 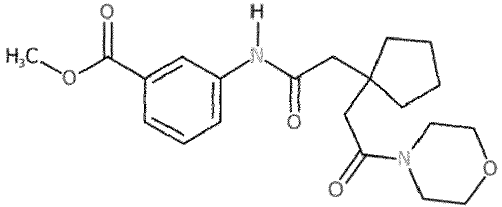 | 12 | 1783 |
| 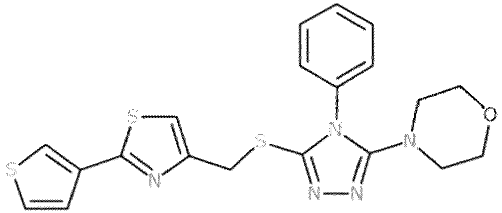 | 12 | 788 |
| 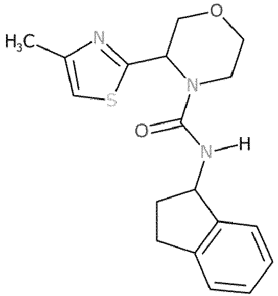 | 12 | 1359 |
| 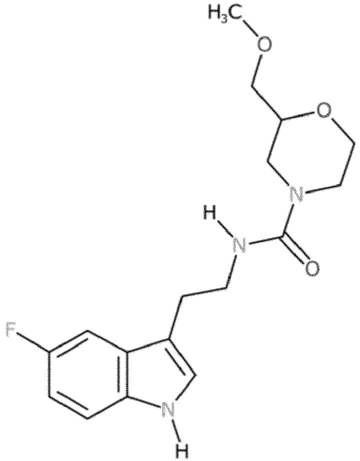 | 13 | 333 |
| 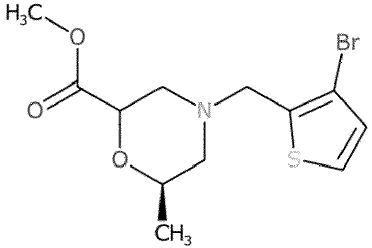 | 13 | 1170 |
| 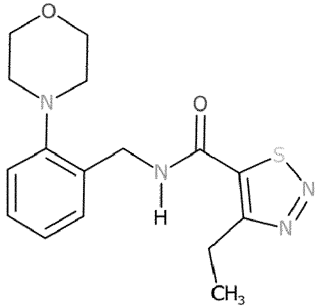 | 13 | 1159 |
| 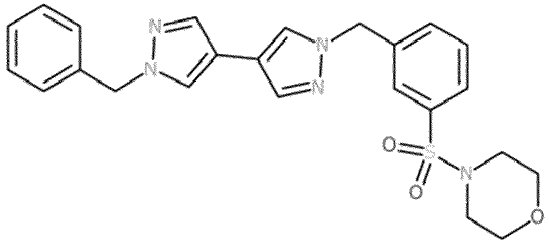 | 14 | 862 |
| 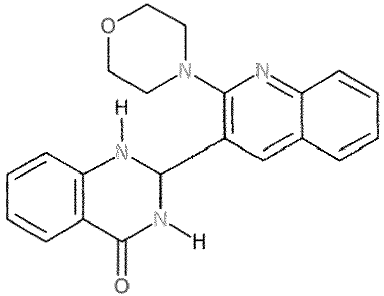 | 14 | 1399 |
| 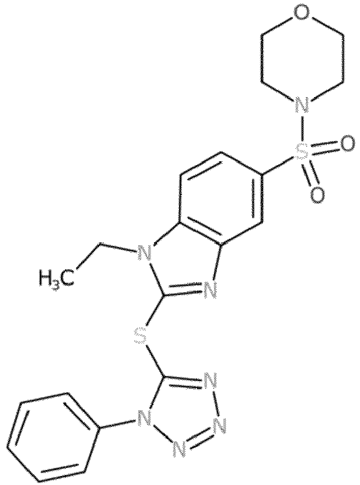 | 14 | 930 |
| 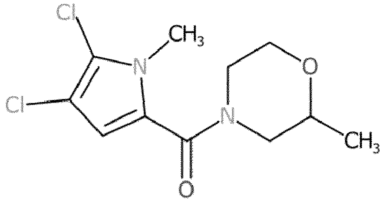 | 14 | 1129 |
| 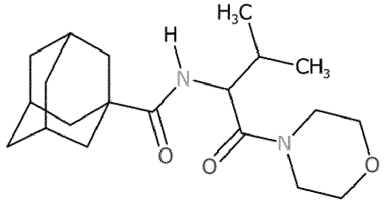 | 14 | 1762 |
| 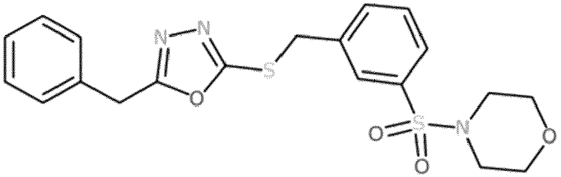 | 14 | 1036 |
| 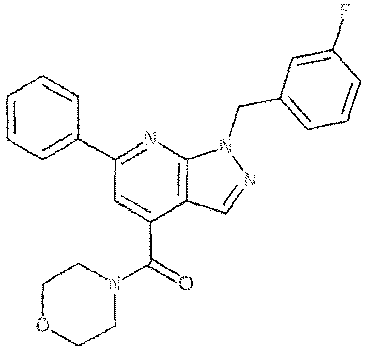 | 14 | 1619 |
| 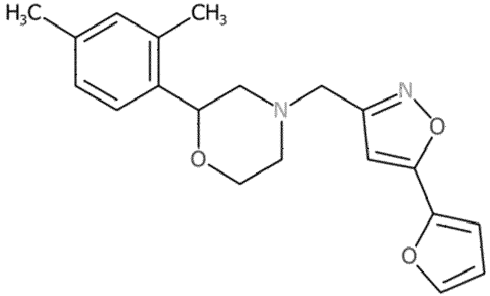 | 15 | 1306 |
| 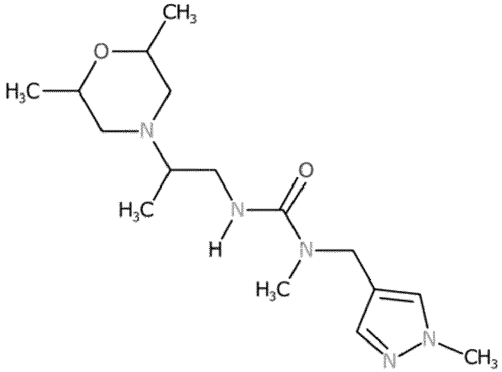 | 15 | 281 |
| 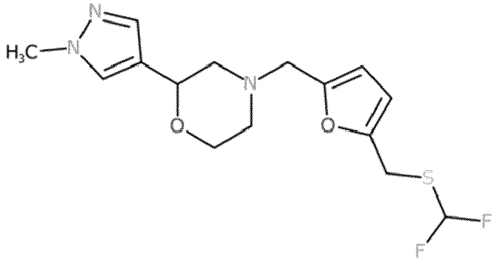 | 15 | 2063 |
| 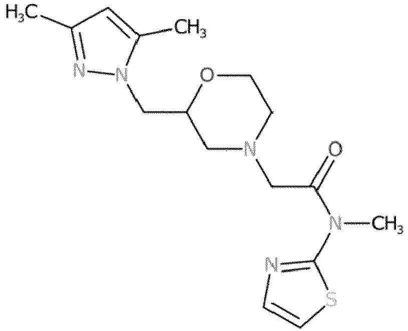 | 15 | 669 |
| 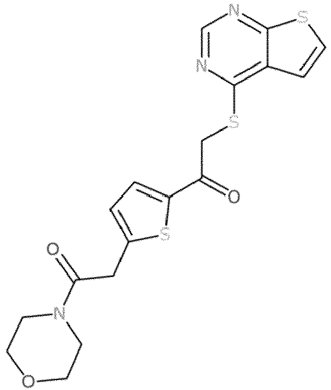 | 15 | 1645 |
| 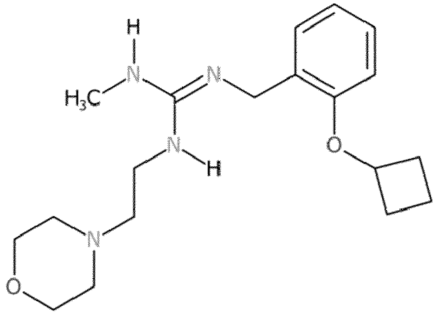 | 16 | 1578 |
| 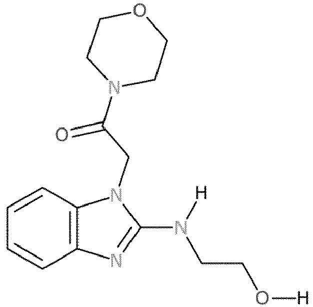 | 16 | 2713 |
| 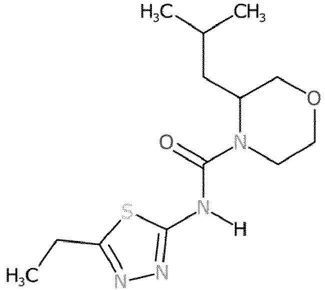 | 16 | 956 |
| 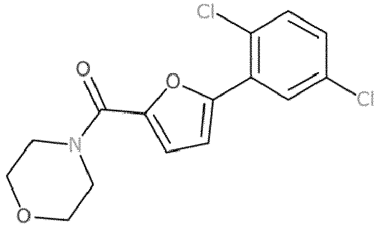 | 16 | 1313 |
| 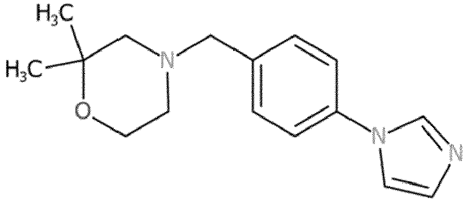 | 16 | 437 |
| 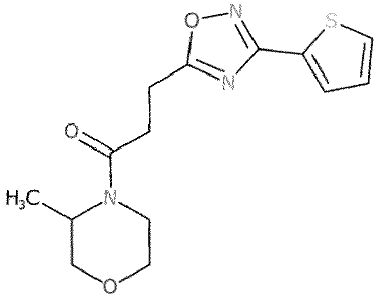 | 17 | 480 |
| 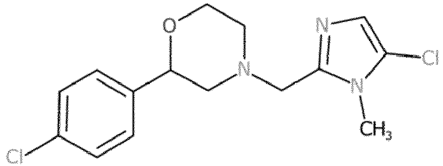 | 17 | 616 |
| 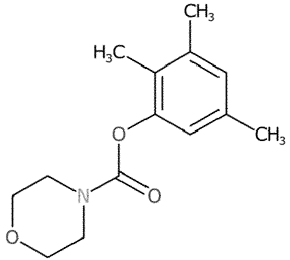 | 17 | 769 |
| 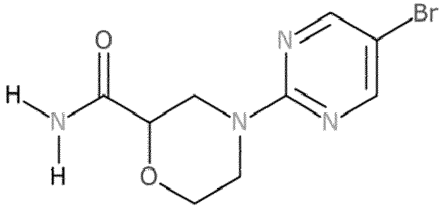 | 17 | 1454 |
| 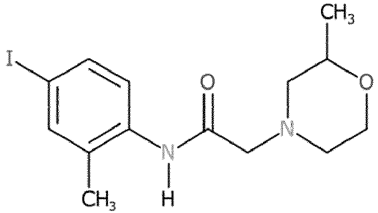 | 17 | 328 |
| 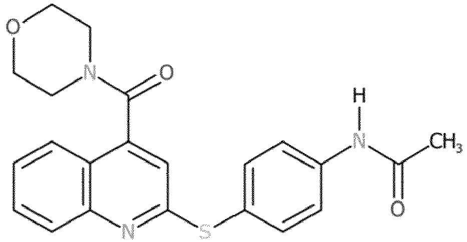 | 18 | 2280 |
| 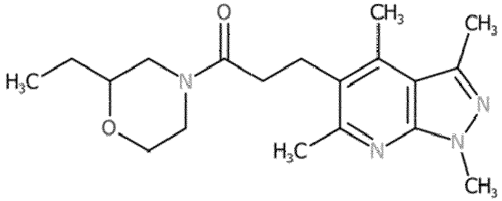 | 19 | 543 |
| 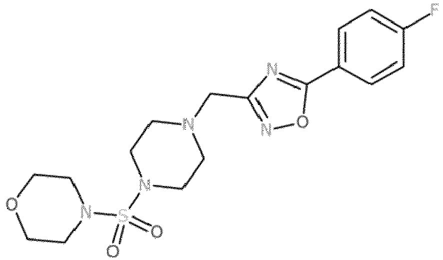 | 19 | 1413 |
| 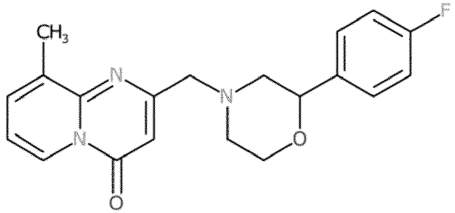 | 19 | 1919 |
| 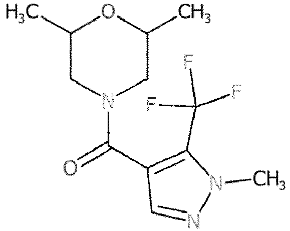 | 19 | 1187 |
| 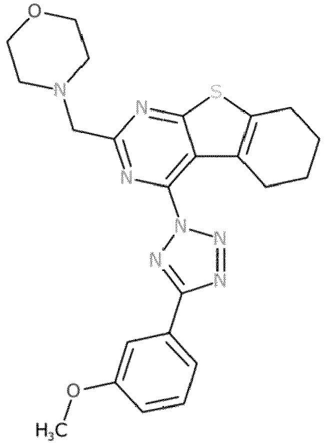 | 20 | 2549 |
| 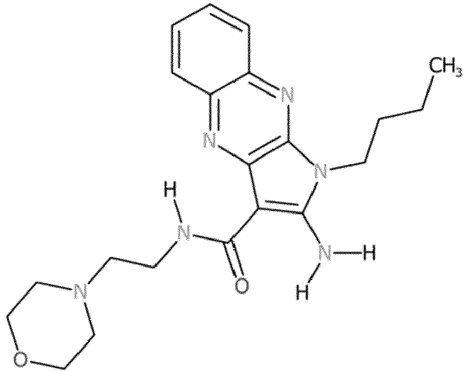 | 20 | 775 |
| 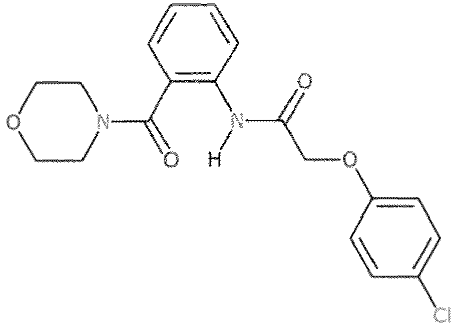 | 20 | 1098 |
| 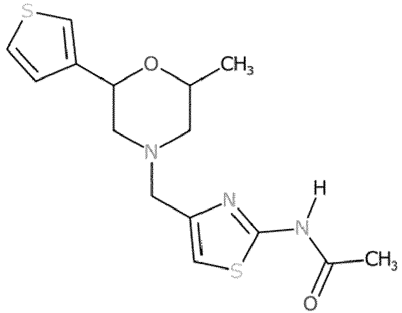 | 20 | 232 |
| 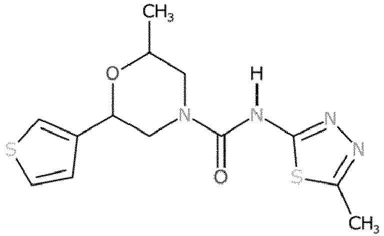 | 20 | 451 |
| 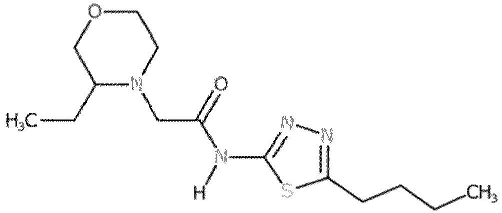 | 21 | 1035 |
| 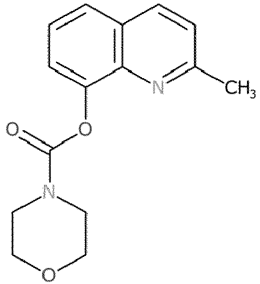 | 21 | 764 |
| 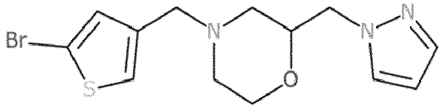 | 21 | 1304 |
| 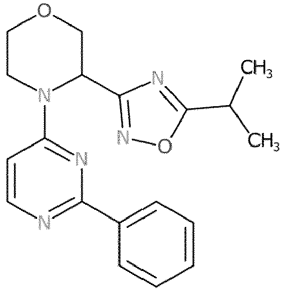 | 21 | 646 |
| 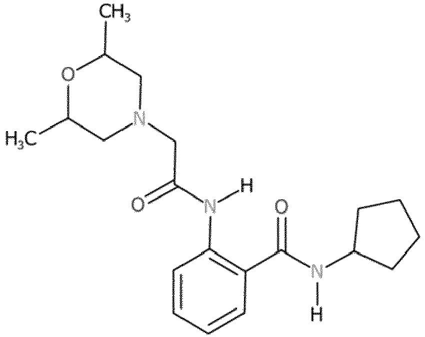 | 21 | 1636 |
| 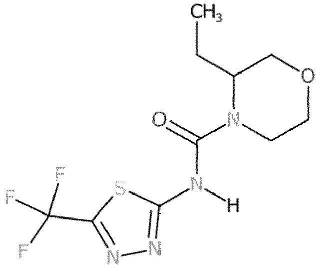 | 21 | 882 |
| 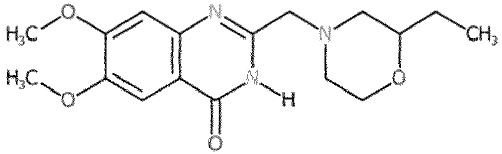 | 21 | 1762 |
| 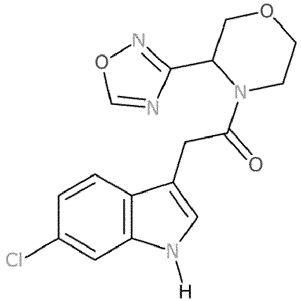 | 22 | 646 |
| 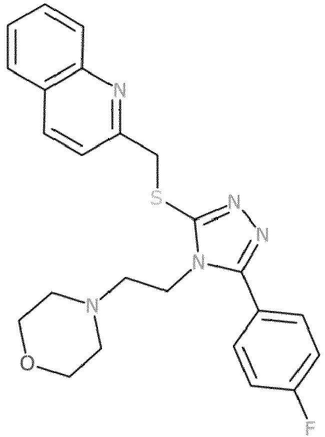 | 22 | 986 |
| 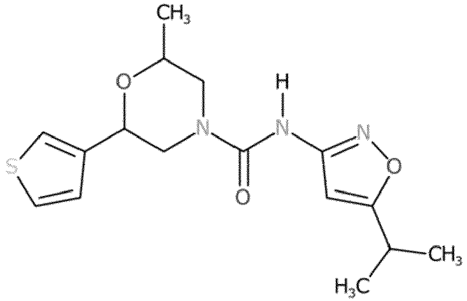 | 23 | 1266 |
| 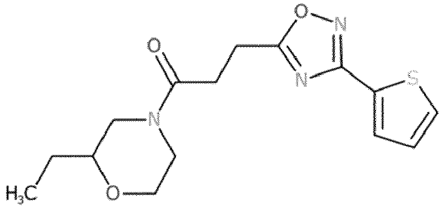 | 23 | 879 |
| 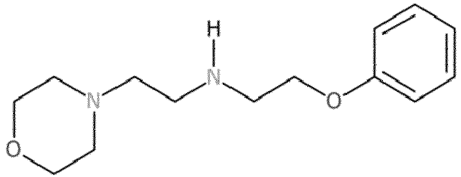 | 23 | 1647 |
| 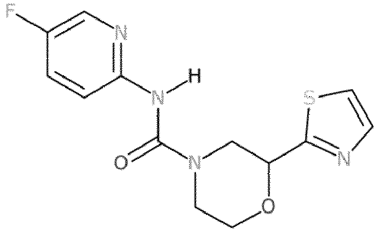 | 24 | 214 |
| 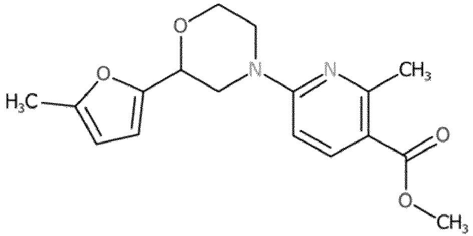 | 24 | 711 |
| 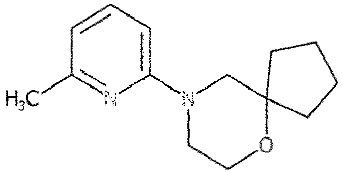 | 25 | 448 |
| 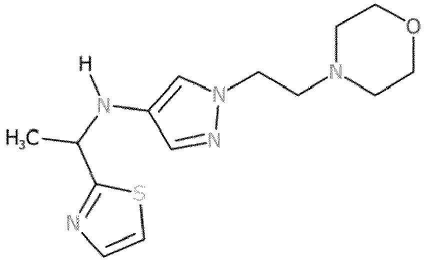 | 25 | 692 |
| 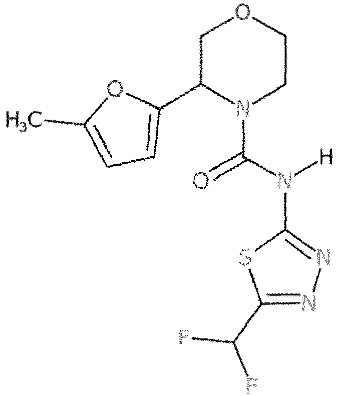 | 26 | 713 |
| 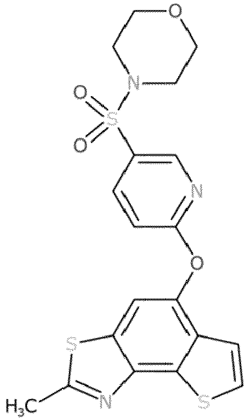 | 26 | 681 |
| 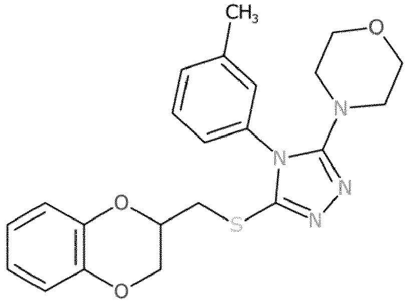 | 26 | 1128 |
| 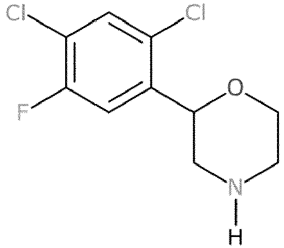 | 27 | 670 |
| 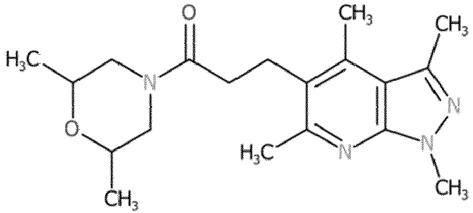 | 27 | 270 |
| 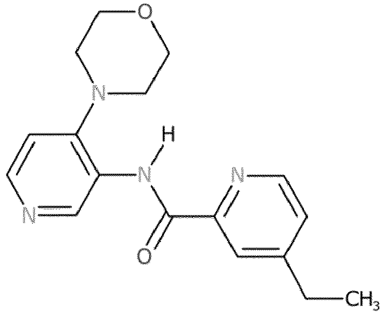 | 27 | 713 |
| 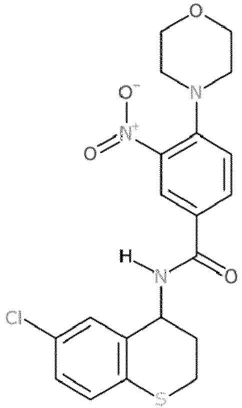 | 27 | 2170 |
| 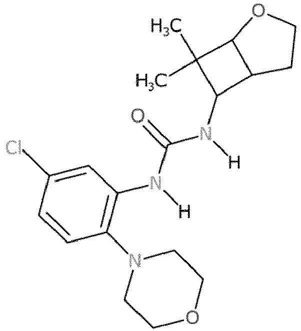 | 28 | 583 |
| 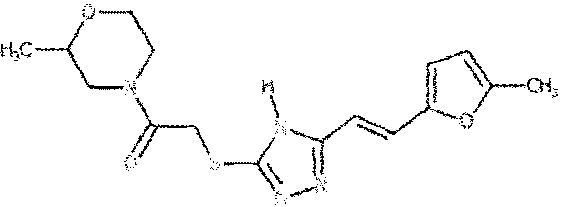 | 28 | 699 |
| 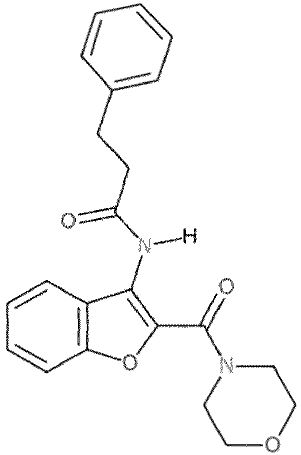 | 28 | 1187 |
| 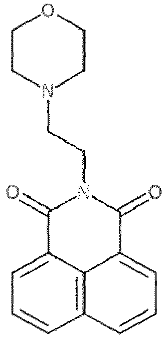 | 29 | 942 |
| 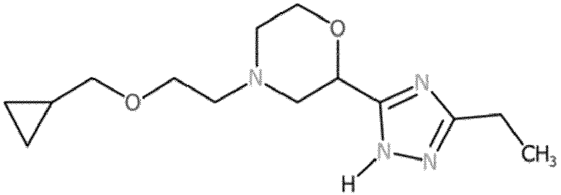 | 30 | 238 |
| 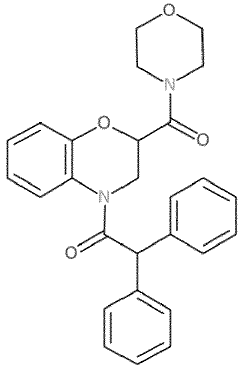 | 30 | 1619 |
| 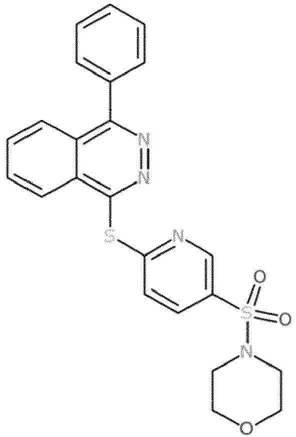 | 31 | 1073 |
| 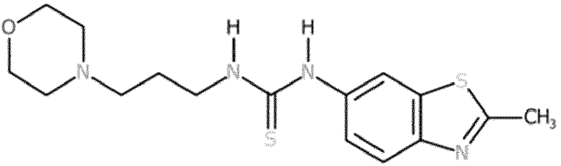 | 31 | 621 |
| 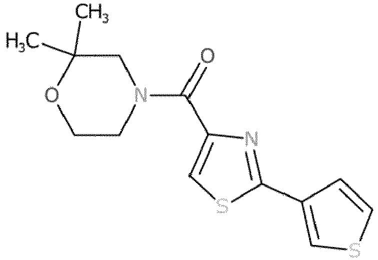 | 31 | 441 |
| 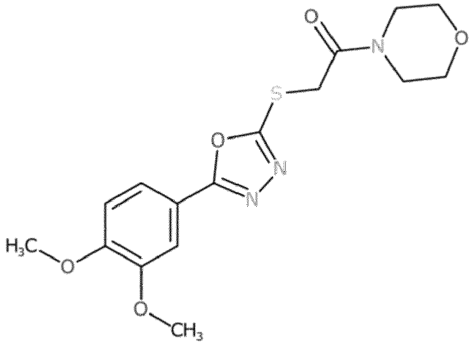 | 32 | 706 |
| 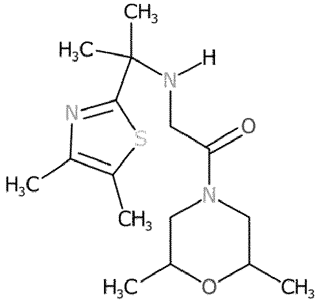 | 34 | 281 |
| 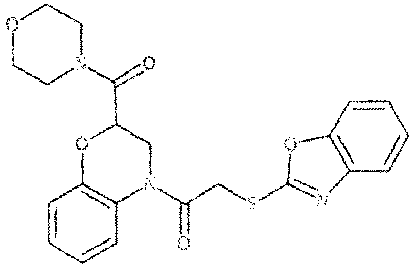 | 34 | 1282 |
| 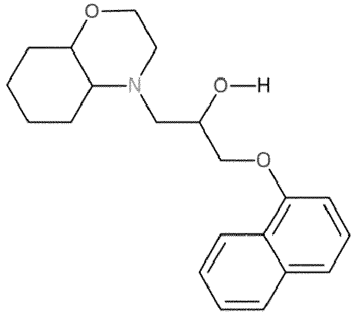 | 34 | 1148 |
| 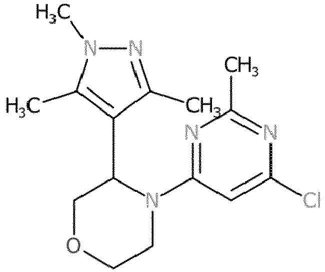 | 35 | 1252 |
| 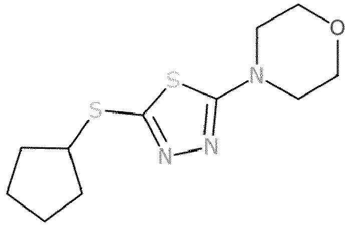 | 35 | 1452 |
| 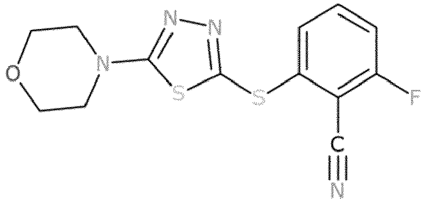 | 35 | 669 |
| 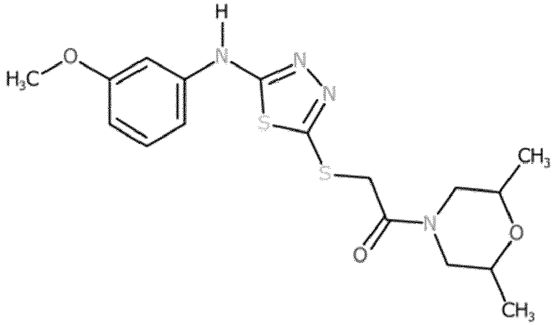 | 37 | 1774 |
| 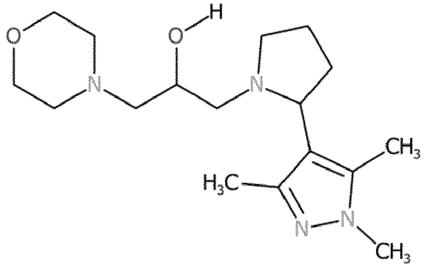 | 37 | 923 |
| 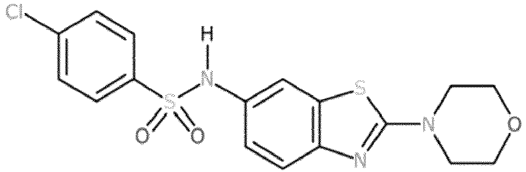 | 37 | 681 |
| 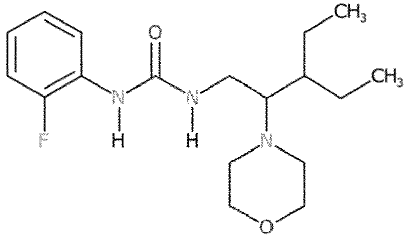 | 37 | 1598 |
| 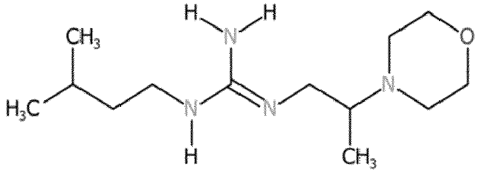 | 37 | 338 |
| 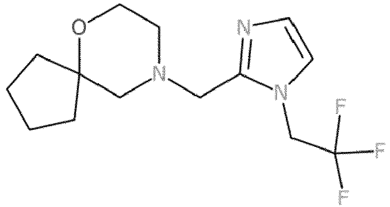 | 38 | 208 |
| 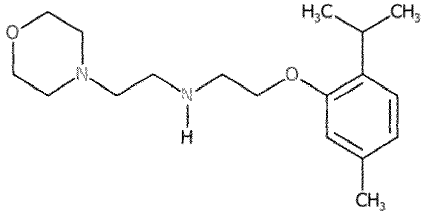 | 40 | 788 |
| 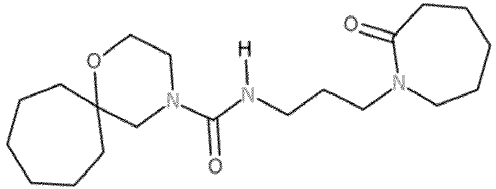 | 40 | 338 |
| 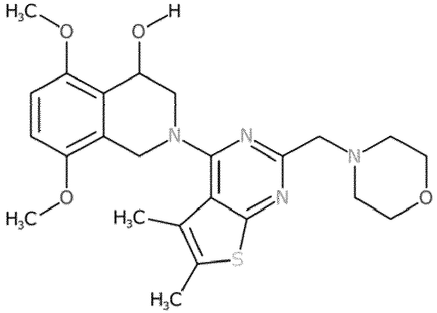 | 42 | 544 |
| 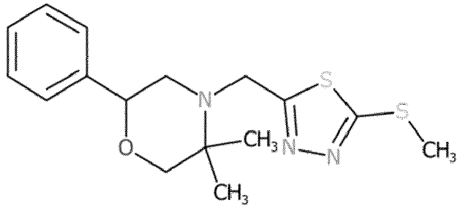 | 43 | 669 |
| 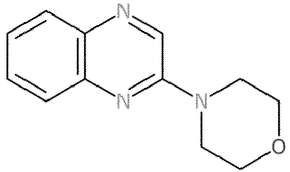 | 43 | 1084 |
| 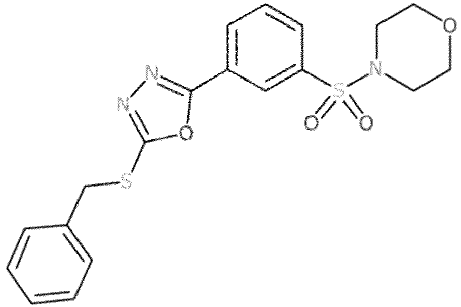 | 43 | 516 |
| 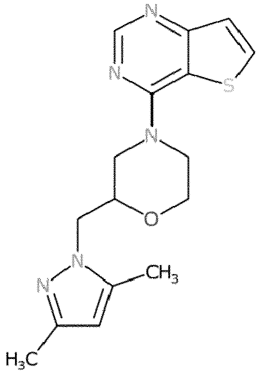 | 44 | 1304 |
| 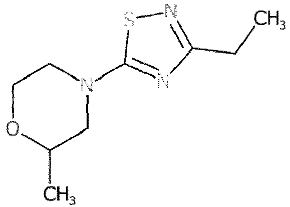 | 44 | 1189 |
| 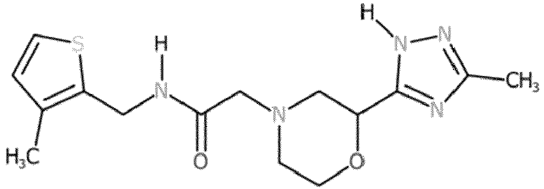 | 44 | 780 |
| 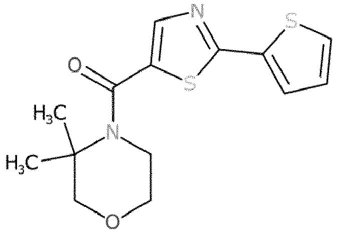 | 45 | 1058 |
| 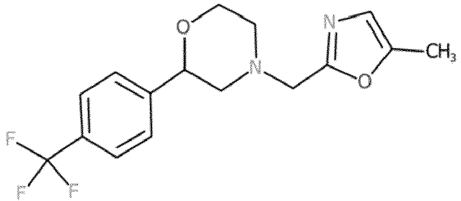 | 46 | 1783 |
| 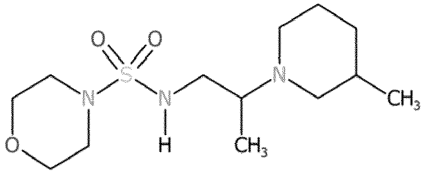 | 46 | 87 |
| 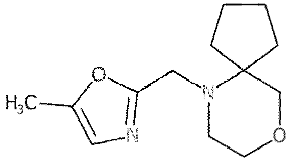 | 46 | 448 |
| 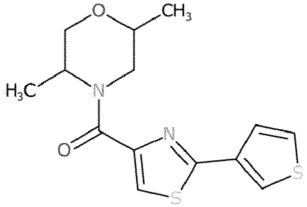 | 46 | 1187 |
| 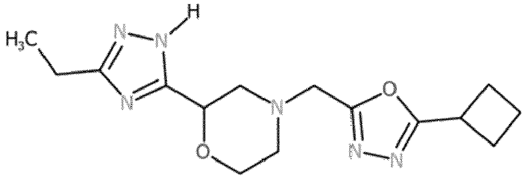 | 46 | 208 |
| 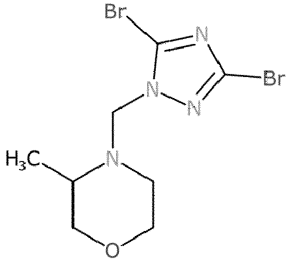 | 47 | 560 |
| 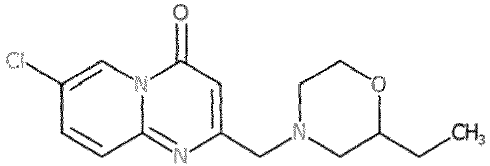 | 47 | 571 |
| 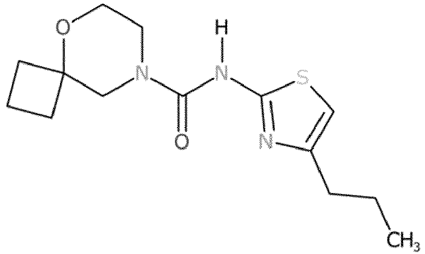 | 49 | 870 |
| 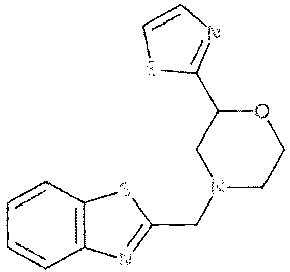 | 49 | 1483 |
| 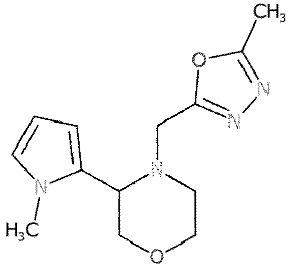 | 50 | 273 |
| 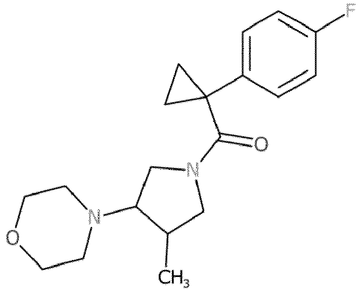 | 53 | 1170 |
| 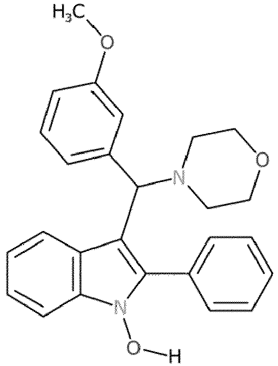 | 54 | 59 |
| 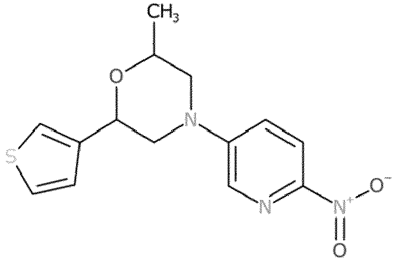 | 55 | 1478 |
| 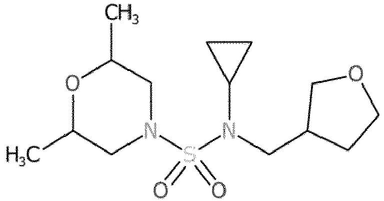 | 60 | 380 |
| 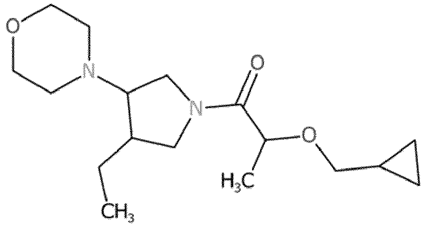 | 62 | 208 |
| 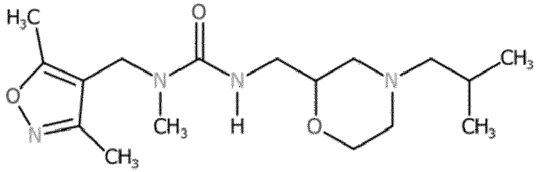 | 62 | 333 |
| 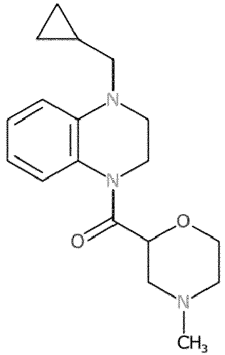 | 64 | 692 |
| 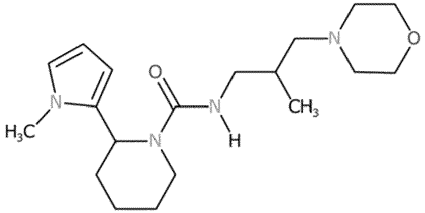 | 65 | 646 |
| 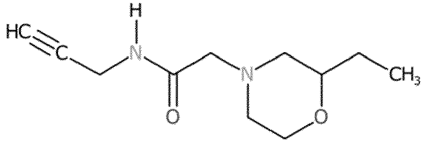 | 66 | 320 |
| 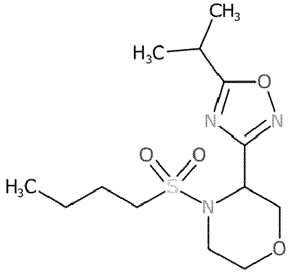 | 73 | 311 |
| 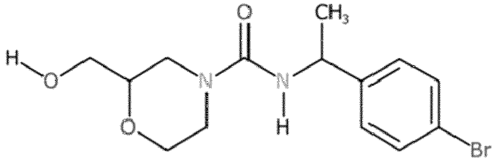 | 129 | 773 |
| 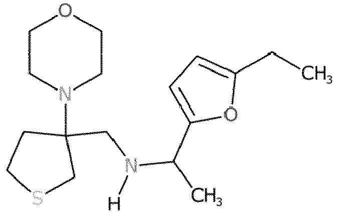 | 151 | 1162 |
| 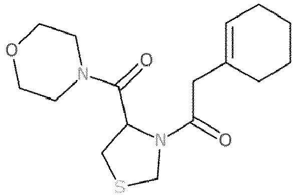 | 162 | 1979 |
| 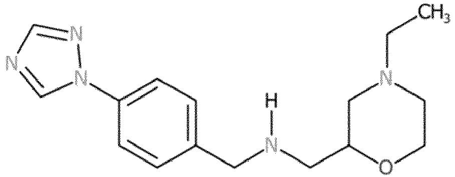 | 301 | 1285 |
| 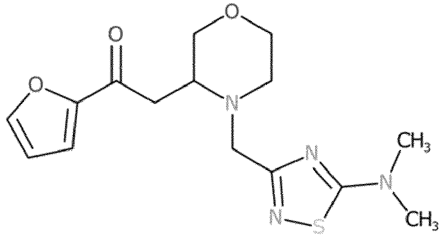 | 330 | 1358 |
| 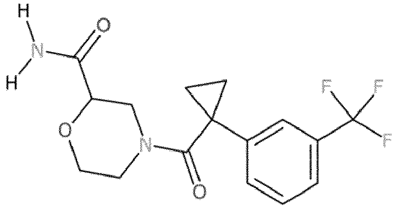 | 349 | 659 |
| 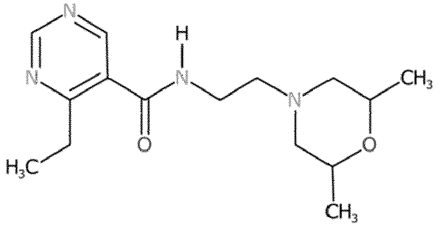 | 362 | 1375 |
| 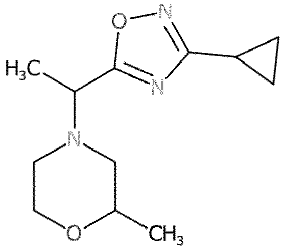 | 441 | 2034 |
| 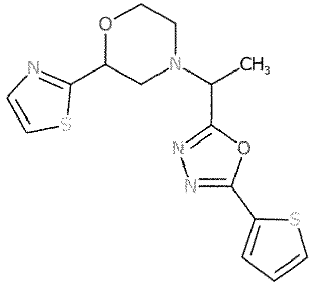 | 453 | 773 |
| 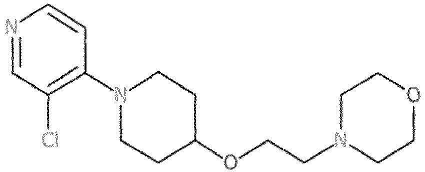 | 491 | 1979 |

## Claims

1. The use of a compound of the general formula (I) 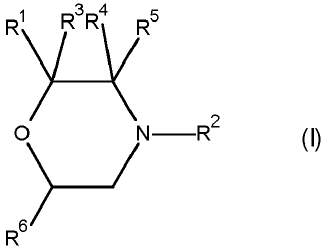 containing one to six cyclic group, at most three of which can be annelated, with the following definitions:
R¹, R⁵ hydrogen, halogen, NH₂, C₁-₃₀-hydrocarbon residue which is linked with the morpholyl group via a carbon atom and which can contain one to three halogen atoms and/or one to six heteroatoms, selected from the group consisting of nitrogen, oxygen and sulphur, with the proviso that if R¹ is different from hydrogen, then R⁵ is hydrogen, and if R⁵ is different from hydrogen, then R¹ is hydrogen,
R² C₁₋₃₀-hydrocarbon residue which is linked with the morpholyl group via a carbon atom and which can contain one or two halogen atoms and/or one to ten heteroatoms, selected from the group consisting of nitrogen, oxygen and sulphur,
R³, R⁴, R⁶ hydrogen or C₁₋₃-alkyl, with the proviso that at least two of R¹, R³, R⁴, R⁵ and R⁶ are hydrogen; or two of R¹ to R⁶ are linked with each other to form a 4- to 8-membered carbocyclic or heterocyclic ring structure,
as plant growth promotor.

2. The use as claimed in claim 1 wherein at least three, preferably at least four of R¹, R³, R⁴, R⁵ and R⁶ are hydrogen; and/or wherein a cyclic structure is formed by linking of R¹ and R³ or of R⁴ and R⁵ or of R¹ and R⁴ or of R⁴ and R²; and/or wherein the compound of the general formula (I) contains 1 to 7, preferably 2 to 7, more preferably 3 to 5 ring structures.

3. The use as claimed in claim 1 or 2, wherein the compound of the general formula (I) was the general formula (II) 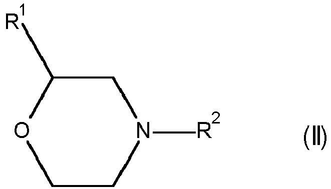 containing one to six cyclic group, at most three of which can be annelated, with the following definitions:
R¹ hydrogen, halogen, NH₂, C₁₋₃₀-hydrocarbon residue which is linked with the morpholyl group via a carbon atom and which can contain one to three halogen atoms and/or one to six heteroatoms, selected from the group consisting of nitrogen, oxygen and sulfur,
R² C₁₋₃₀-hydrocarbon residue which is linked with the morpholyl group via a carbon atom and which can contain one or two halogen atoms and/or one to seven heteroatoms, selected from the group consisting of nitrogen, oxygen and sulphur.

4. The use as claimed in one of claims 1 to 3 as biostimulant and/or as fertilizer additive; or for suppressing
- the expression of phosphate starvation biomarkers in plants or
- the SPX1 biomarker or
- the *Arabidopsis* gene SPX1.

5. The use as claimed in one of claims 1 to 3
- for mitigating and/or reducing the phosphate starvation stress of plants or for improving
- the phosphorus or phosphate use efficiency of plants or
- the phosphorus or phosphate uptake of plants,
- the root hair development,
- root system architecture,
- drought resistance development,
- nutrient uptake efficiency of plants,
- the phosphate availability for plants,
- water or nutrient uptake of plants,
- beneficial symbiotic interactions of plants,
- soil microbiome or
- phosphorous or phosphate availability from phosphate rock or organic phosphate.

6. The use as claimed in one of claims 1 to 5, wherein in the compound of the general formula (I) all cyclic groups are heterocyclic groups, and/or wherein in the compound of general formula (I) R¹ is hydrogen or a C₂₋₁₂-hydrocarbon residue, preferably C₃₋₇-hydrocarbon residue which contains one to five heteroatoms and no halogen atoms.

7. The use as claimed in one of claims 1 to 6, wherein in the compound of the general formula (I) R² is a C₁₋₁₂-hydrocarbon residue, preferably C₁₋₁₀-hydrocarbon residue, which contains up to six heteroatoms and no halogen atoms, preferably including at least one thiazole group.

8. The use as claimed in one of claims 1 to 7, wherein the compound of the general formula (I) contains one to four heterocyclic groups, preferably including at least one thiazole group, at most two of which can be annelated, and preferably no carbocyclic groups.

9. A method for promoting growth of a plant, comprising adding to growing medium or soil in which the plant is grown, a compound as defined in any of claims 1 to 3 or 6 to 8.

10. A mixture containing at least one compound of general formula (I) or (II) as defined in one of claims 1 to 3 or 6 to 8,
and at least one additional agrochemical agent, preferably selected from the group consisting of
- at least one inorganic and/or organic and/or organomineral fertilizer
- at least one nitrification inhibitor, preferably selected from the group consisting of 2-(3,4-dimethyl-pyrazol-1-yl)-succinic acid (DMPSA), 3,4-dimethylpyrazole (DMP), 3,4-dimethylpyrazolephosphate (DMPP), dicyandiamide (DCD), 1H-1,2,4-triazole, 3-methylpyrazole (3-MP), 2-chloro-6-(trichloromethyl)-pyridine, 5-ethoxy-3-trichloromethyl-1,2,4-thiadiazol, 2-amino-4-chloro-6-methyl-pyrimidine, 2-mercaptobenzothiazole, 2-sulfanilamidothiazole, thiourea, sodium azide, potassium azide, 1-hydroxypyrazole, 2-methylpyrazole-1-carboxamide, 4-amino-1,2,4-triazole, 3-mercapto-1,2,4-triazole, 2,4-diamino-6-trichloromethyl-5-triazine, carbon bisulfide, ammonium thiosulfate, sodium trithiocarbonate, 2,3-dihydro-2,2-dimethyl-7-benzofuranol methyl carbamate and N-(2,6-dimethylphenyl)-N-(methoxyacetyl)-alanine methyl ester,
- at least one urease inhibitor, preferably selected from N-n-butylthiophosphoric triamide (NBPT) and/or N-n-propylthiophosphoric triamide (NPPT),
- at least one customary agrochemical auxiliary agent, preferably selected from the group consisting of aqueous and/or organic solvents, pH-adjusting agents, surfactants, wetting agents, spreading agents, adhesion promoters, carriers, fillers, viscosity-adjusting agents, emulsifiers, dispersants, sequestering agents, anti-settling agents, coalescing agents, rheology modifiers, defoaming agents, photo-protectors, anti-freeze agents, biostimulants, pesticides, biocides, plant growth regulators, safeners, penetrants, anticaking agents, mineral and/or vegetable oils and/or waxes, colorants and drift control agents,
and mixtures thereof.

11. A fertilizer mixture, containing
A. an inorganic and/or organic and/or organomineral fertilizer and
B. effective amount, preferably 10 to 10000 weight-ppm, based on the fertilizer, of a compound of the general formula (I) or (II) as defined in one claims 1 to 3 or 6 to 8.

12. The fertilizer mixture as claimed in claim 11, wherein the fertilizer mixture is in solid form and the compound of the general formula (I) or (II) is incorporated into the fertilizer or is applied to the surface of the, preferably inorganic, fertilizer.

13. The fertilizer mixture as claimed in one of claims 11 or 12, wherein the fertilizer mixture contains at least one additional agrochemical agent, preferably selected from the group consisting of
- at least one nitrification inhibitor, preferably selected from the group consisting of 2-(3,4-dimethyl-pyrazol-1-yl)-succinic acid (DMPSA), 3,4-dimethylpyrazole (DMP), 3,4-dimethylpyrazolephosphate (DMPP), dicyandiamide (DCD), 1H-1,2,4-triazole, 3-methylpyrazole (3-MP), 2-chloro-6-(trichloromethyl)-pyridine, 5-ethoxy-3-trichloromethyl-1,2,4-thiadiazol, 2-amino-4-chloro-6-methyl-pyrimidine, 2-mercaptobenzothiazole, 2-sulfanilamidothiazole, thiourea, sodium azide, potassium azide, 1-hydroxypyrazole, 2-methylpyrazole-1-carboxamide, 4-amino-1,2,4-triazole, 3-mercapto-1,2,4-triazole, 2,4-diamino-6-trichloromethyl-5-triazine, carbon bisulfide, ammonium thiosulfate, sodium trithiocarbonate, 2,3-dihydro-2,2-dimethyl-7-benzofuranol methyl carbamate and N-(2,6-dimethylphenyl)-N-(methoxyacetyl)-alanine methyl ester,
- at least one urease inhibitor, preferably selected from N-n-butylthiophosphoric triamide (NBPT) and/or N-n-propylthiophosphoric triamide (NPPT),
- at least one customary agrochemical auxiliary agent, preferably selected from the group consisting of aqueous and/or organic solvents, pH-adjusting agents, surfactants, wetting agents, spreading agents, adhesion promoters, carriers, fillers, viscosity-adjusting agents, emulsifiers, dispersants, sequestering agents, anti-settling agents, coalescing agents, rheology modifiers, defoaming agents, photo-protectors, anti-freeze agents, biostimulants, pesticides/plant production products, biocides, plant growth regulators, safeners, penetrants, anticaking agents, mineral and/or vegetable oils and/or waxes, colorants and drift control agents,
and mixtures thereof.

14. A process for producing the fertilizer mixture as claimed in one of claims 11 to 13 by introducing the compound of the general formula (I) or (II) into the fertilizer, and/or applying the compound of the general formula (I) or (II) to the surface of the fertilizer.

15. A method of fertilizing soils exploited agriculturally or horticulturally,
wherein a fertilizer mixture containing compounds A and B
A. an inorganic and/or organic and/or organomineral fertilizer and
B. 10 to 10000 weight-ppm, based on the fertilizer, of a compound of the general formula (I) or (II) as defined in one claims 1 to 3 or 6 to 8,
or compounds A and B separately, but within a period of 0 to 5 hours, preferably 0 to 1 hour, more preferably approximately at the same time,
is applied to the soils.
